# EUROPEAN PATENT SPECIFICATION

(11) **EP 3 526 742 B1**
(45) Date of publication and mention of the grant of the patent: **28.01.2026**
(21) Application number: 19722775.4
(22) Date of filing: 06.02.2019
(51) Int. Cl.: G06Q 10/02

(54) **MANAGING EVENT DATABASES USING HISTOGRAM-BASED ANALYSIS**
VERWALTUNG VON EREIGNISKALENDERN MIT HISTOGRAMMBASIERTER ANALYSE
GESTION DE CALENDRIERS D'ÉVÉNEMENTS AU MOYEN D'UNE ANALYSE BASÉE SUR UN HISTOGRAMME

(30) Priority: 07.02.2018 US 201862627452 P
(43) Date of publication of application: 21.08.2019
(73) Proprietor: Blackbook Media Inc., Quincy, Massachusetts 02169 (US)
(72) Inventor: ALBERTINE, Scott Herman, Quincy, Massachusetts 02169 (US); GOLUBIC, K. Viktor, Quincy, Massachusetts 02169 (US); HUBER II, Thomas Joseph, Quincy, Massachusetts 02169 (US)
(74) Representative: Clarke, Modet y Cía., S.L.
(86) International application number: PCT/US2019/016771
(87) International publication number: WO 2019/113612

(56) References cited:
- US-A1- 2010 027 527
- US-A1- 2010 114 614
- US-A1- 2011 010 244
- US-A1- 2014 025 654
- US-A1- 2014 040 370
- US-A1- 2014 143 004
- US-A1- 2017 034 108
- US-A1- 2017 099 592

## Description

### TECHNICAL FIELD

This disclosure relates to maintaining database systems, and more specifically to maintaining a database of social media event items (e.g., for use with social media platforms) enabling users to create and share social media event items in an automated manner.

### BACKGROUND

A database (e.g., a relational database or another kind of database) can store a variety of data, such as data generated and maintained by a social media platform. A social media platform is an online platform that enables users to build social networks and/or social relationships with other users. For instance, a user can create a persona on the social media platform, and use the persona to interact with other users. As an example, a user can create a social media profile by inputting personal information, biographical information, and/or other information regarding herself (e.g., name, contact information, personal interests, job information, photographs, videos, audio, etc.). Further, a user can associate herself with other users of the social media platform (e.g., by specifying one or more users that are acquaintances, business connections, and/or friends).

In some cases, a social media platform also enables users to share information with one another. For example, in some social media platforms, users can transmit messages, photographs, videos, audio, documents, and/or other content to one another via the social media platform.

In some cases, a social media platform also enables users to promote and organize events. For example, in some social media platforms, a user can input information regarding an upcoming event, and share the information with other users. Recipients can review information regarding the event, discuss the event, and/or RSVP to the event.

US 2010/027527 A1 describes a system and method for improved mapping and routing. A request for the determination of a route is received over a network. The request comprises an identification of a requesting user, and at least one objective. Spatial, temporal, topical, and social data available to the network which relating to the requesting user and the request objectives are retrieved using a global index of data available to the network. At least one entity which satisfies at least one request objective and which has a physical location known to the network is selected using the retrieved spatial, temporal, topical, and social data. At least one physical route is mapped between a starting location and the selected entity and is displayed on a display medium. Sponsored and recommended content available to the network which relates to the requesting user, and at least one objective can additionally be displayed on the display medium.

US 2011/010244 A1 describes a content delivery system that is based on user interest. The system includes client and server components. At each client, information about user interactions is collected and compared to information defining a set of user interest categories. In this way, the client can determine one or more interest categories in which the user fits. The client can then offer to the user content that is classified in accordance with the same set of user categories. The server can supply the client with the information defining user interest categories and a manifest of content options with associated categories. Additionally, the server can receive indications of when each content offering is presented to a user and when the user selects to acquire a content option. The server may also participate in offering the content. The content may be software applications.

US 2017/099592 A1 refers to personalized notifications for mobile applications users.

### SUMMARY

A social media platform can enable a user to promote and organize events in an automated manner. For example, a "controlling user" for an event (e.g., a user responsible for creating, organizing, scheduling, rescheduling, administrating, and/or publicizing the event) can interact with the social media platform to create a social media event item representing the event. The controlling user can populate the social media event item with information regarding the event, such as the scheduled time of the event, a planned location of the event, a description of the event, and other content regarding the event (e.g., text, images, audio, video, etc.). Further, the controlling user can share the social media event item with other users (e.g., potential attendees). Each recipient can review the social media event item to obtain information regarding the event, discuss the event, and/or RSVP to the event.

In some cases, the controlling user can specify one or more interest categories pertaining to, relevant to, and/or otherwise associated with the event. Further, the interest categories that are specified by the controlling user for a particular event can be used to automatically recommend or suggest that event to one or more users. For example, each user can interact with the social media platform to create a social media profile (e.g., a personal profile including information regarding the user), and populate her social media profile with one or more interest categories that are of interest to her. Based on this information, the social media platform can automatically determine that a particular user may be interested in an event (e.g., due to an interest category common to both the social media profile of that user and the event's social media event item). In response, the social media platform can automatically present the event's social media event item to that second user.

In some cases, the social media platform can automatically suggest or recommend a particular event based on the interest categories selected by the users who indicated that they plan to attend the event. For example, a number of users may have RSVPed "yes" to a particular event (e.g., indicating that they are planning to attend the event). Further, a significant portion of those users may have each selected a particular interest category for their respective social media profiles that was not included in the event's social media event item. Based on this information, the social media platform can automatically determine that users who are interested in this additional interest category may also enjoy the event, even though the additional interest category was not expressly specified by the controlling user of the event. Accordingly, the social media platform can automatically present the event's social media event item to one or more additional users who also selected the additional interest category in their social media profiles.

In an aspect, a method includes generating, by a server system: profile data for a plurality of users and event data for a plurality of social media events. The profile data includes, for each user, an indication of one or more interest categories associated with the user. The event data includes, for each social media event, an indication of one or more users associated with the social media event. The method also includes determining, by the server system, that a first subset of users is associated with a first social media event, and storing, by the server system, the profile data and the event data in one or more databases. The method also includes determining, by the server system, that a first subset of interest categories is associated with the first subset of users, and determining, by the server system, that a second subset of interest categories is associated with the first social media event, the second subset of interest categories being selected by a controlling user of the first social media event. The method also includes generating an event data structure for the first social media event based on the first subset of interest categories and the second subset of interest categories. The event data structure includes an indication of the first subset of interest categories and the second subset of interest categories, and for each interest category of the first subset of interest categories and the second subset of interest categories, a respective frequency metric based on a number of users of the first subset of users associated with that interest category and whether that interest category had been selected by the controlling user of the first social media event. The method also includes executing, by the server system, one or more processes configured to monitor database transactions causing a change to the data of the one or more databases, determining, by the server system, that a transaction meets trigger criteria with respect to the first social media event, and responsive to determining that the transaction meets the trigger criteria with respect to the first social media event, modifying the event data structure based on the transaction.

Implementations of this aspect can include one or more of the following features.

In some implementations, the transaction can include at least one of a modification to profile data associated with the first subset of users, or a modification to event data associated with the first event.

In some implementations, the modification can include an addition or removal of an interest category.

In some implementations, the modification can include an association of an additional user with the first social media event, or disassociation of a user from the first social media event.

In some implementations, determining that the transaction meets the trigger criteria with respect to the first social media event can include determining that a particular interest category has been added or removed from the profile data of a particular user of the first subset of users, and determining that the first social media event has not yet occurred. Modifying the event data structure can include modifying the frequency metric associated with the particular interest category in the event data structure.

In some implementations, the method can further include determining, by the server system, that the transaction meets trigger criteria with respect to one or more additional social media events, and responsive to determining that the transaction meets the trigger criteria with respect to the one or more social media events, modifying the event data structures for the one or more social media events based on the transaction.

In some implementations, determining that the transaction meets the trigger criteria with respect to the first social media event can include determining that an additional user has been associated with the first social media event, and determining that the first social media event has not yet occurred. Modifying the event data structure can include determining that the additional user is associated with an additional interest category, and modifying the event data structure to include an indication of the additional interest category.

In some implementations, determining that the transaction meets the trigger criteria with respect to the first social media event can include determining that an additional user has been associated with the first social media event, and determining that the first social media event has not yet occurred. Modifying the event data structure can include determining that the additional user is associated with a particular interest category of the first subset of interest categories, and responsive to determining that the additional user is associated with the particular interest category of the first subset of interest categories, modifying the frequency metric associated with the particular interest category in the event data structure.

In some implementations, modifying the frequency metric associated with the particular interest category in the event data structure can include incrementing the frequency metric associated with the particular interest category.

In some implementations, determining that the transaction meets the trigger criteria with respect to the first social media event can include determining that a particular user of the first subset of users has been disassociated with the first social media event, and determining that the first social media event has not yet occurred. Modifying the event data structure can include determining that the disassociated user was associated with a particular interest category of the first subset of interest categories, and responsive to determining that the disassociated user was associated with the particular interest category of the first subset of interest categories, modifying the frequency metric associated with the particular interest category in the event data structure.

In some implementations, modifying the frequency metric associated with the particular interest category in the event data structure can include decrementing the frequency metric associated with the particular interest category.

In some implementations, the method can further include generating and displaying a histogram based on the event data structure.

In some implementations, the method can further include generating one or more additional event data structures for one or more additional social media events, and generating and displaying a plurality of histograms based on the event data structure and the one or more additional event data structures.

In some implementations, the profile data can include, for at least one user, an indication of one or more public interest categories associated with that user, and an indication of one or more private interest categories associated with that user. The association between that user and the one or more public interest categories can be accessible by one or more other users. The association between that user and the one or more private interest categories can be inaccessible to one or more other users.

In some implementations, the method can further include generating and displaying a histogram corresponding to the one or more public interest categories based on the event data structure.

In some implementations, generating the event data structure based on the first subset of interest categories can include, for each interest category of the first subset of interest categories: incrementing the frequency metric associated with that interest category by a first amount for each user of the first subset of users that is associated with the interest category and has accepted an invitation to the first social media event, and incrementing the frequency metric associated with that interest category by a second amount for each user of the first subset of users that is associated with the interest category and has tentatively accepted an invitation to the first social media event. The first amount can be different than the second amount.

In some implementations, determining that the first subset of interest categories is associated with the first subset of users can include identifying, as the first subset of interest categories, one or more interest categories selected by at least one user of the subset of users.

In some implementations, the method can further include generating, by the server system, a recommendation for the first social media event for an additional user based on the event data structure.

In some implementations generating the recommendation for the first social media event for the additional user can include retrieving profile data for the additional user, determining, based on the profile data for the additional user, the interest categories associated with the additional user, and determining a recommendation score based on the interest categories associated with the additional user and the event data structure.

In some implementations, determining the recommendation score can include determining one or more interest categories common to the interest categories associated with the additional user and the event data structure, and summing the frequency metrics of the event data structure corresponding to each of the common interest categories.

In some implementations, determining the recommendation score can further include determining a distance between a first geographic location associated with the additional user and a second geographic location associated with the first social media event, and modifying the recommendation score based on the distance between the first geographic location and the second geographic location.

In some implementations, determining the recommendation score can further include determining one or more interest categories common to the second subset of interest categories and the interest categories associated with the additional user, and modifying the recommendation score based on the determination.

In some implementations, determining the recommendation score can further include determining: a number of users associated with the second user, and a number of users associated with both the second user and the first social media event, and modifying the recommendation score based on the determination.

In some implementations, generating the recommendation for the first social media event for the additional user further can include determining that the recommendation score exceeds a threshold score, and responsive to determining that the recommendation score exceeds the threshold score, generating a notification to the additional user identifying the first social media event.

In some implementations, the method can further include rendering a graphical user interface, wherein the graphical user interface includes a graphical representation of the event data structure, and presenting the graphical user interface to a user.

In some implementations, the event data structure can be modified in substantially real-time.

In some implementations, the event data structure can be modified periodically.

In some implementations, the method can further include generating, by the server system, a recommendation for an additional interest category for the first user.

In some implementations, generating the recommendation for the additional interest category can include determining that the first user is associated with a first subset of social media events, determining that a third subset of interest categories is associated with at least one social media event of the first subset of social media events, and determining a recommendation score for each interest category in the third subset of interest categories.

In some implementations, determining the recommendation scores can include retrieving, for each social media event of the first subset of social media events, a corresponding event data structure, and summing, for each interest category of the third subset of interest categories, the frequency metrics of the retrieved event data structures corresponding to the interest category.

In some implementations, determining the recommendation scores can further include determining, for each social media event of the first subset of social media events, one or more interest categories selected by a controlling user of the social media event, and modifying the recommendation scores based on the determination.

In another aspect, a method includes generating venue data by a server system. The venue data includes an indication of one or more first interest categories selected by a controlling user with respect to the venue, and an indication of one or more events associated with a venue. The method also includes generating, by the server system, an event data structure for each of the one or more events associated with the venue. Each event data structure includes an indication of one or more second interest categories associated with the event, and for each interest category of the one or more second interest categories, a respective frequency metric. The method also includes generating, by the server system, a venue data structure based on the venue data and the one or more event data structures. The venue data structure includes an indication of the one or more first categories and the one or more second interest categories, and for each interest category of the one or more first categories and the one or more second interest categories, a respective frequency metric determined based on the venue data and the one or more event data structures. The method also includes executing, by the server system, one or more processes configured to monitor database transactions causing a change to the data of the one or more databases. The method also includes determining, by the server system, that a transaction meets trigger criteria with respect to the venue data structure, and in response, modifying the venue data structure based on the transaction.

Implementations of this aspect can include one or more of the following features.

In some implementations, the transaction can include a modification to one or more event data structures.

In some implementations, the transaction can include a modification to the venue data.

In some implementations, the method can further include generating and displaying a histogram based on the venue data structure.

In some implementations, generating the venue data structure can include determining, for each event data structure, a respective weight, and determining the frequency metrics of the venue data structure the based on the weights.

In some implementations, each weight can correspond to a recency of occurrence of a respective event.

In some implementations, the method can further include generating, by the server system, one or more additional venue data structures based on the venue data and the one or more event data structures. Each additional venue data structure can include an indication of the one or more first categories and the one or more second interest categories according to a respective time, and for each interest category of the one or more first categories and the one or more second interest categories, a respective frequency metric according to that time.

In some implementations, the method can further include generating and displaying a plurality of histograms based on the venue data structure and the one or more additional venue data structures.

In some implementations, the method can further include rendering a graphical user interface. The graphical user interface can include a graphical representation of the event data structure. The method can also include presenting the graphical user interface to a user.

In some implementations, the venue data structure can be modified in substantially real-time.

In some implementations, the venue data structure can be modified periodically.

One or more of the implementations described herein can provide various technical benefits. For instance, implementations of a social media platform can enable users to quickly and efficiently create, modify, and distribute event information over a computerized communications network. As an example, the social media platform can automatically determine potentially relevant interest categories for an event, automatically associate those interest categories with a corresponding social media event item, and automatically recommend the event to one or more users (e.g., by presenting the social media event item to one or more users likely to be interested in the event). As this can be performed in an automated manner, the controlling user of the event can create, modify, and/or distribute event information using fewer inputs (e.g., compared to manually identifying interest categories associated with an event, manually modifying an event's social media event item to include additional interest categories, manually identifying users who may be interested in an event, manually sharing the event's social media event item to those users, and so forth). Accordingly, the computational and network resources utilized by the user's device are reduced. Further, implementations of the social media platform receive, process, store, and/or transmit data according to specific data processing rules, thereby enabling the social media platform to operate consistently, reliably, and efficiently, and produce results that otherwise could not be achieved using traditional techniques (e.g., automatically maintaining social media event items in a dynamic manner, automatically identifying users that may be interested in particular events, etc.). Further still, these operations can be performed by applying computer-based rules to crowd-sourced computerized data records, rather than based on subjective human input (e.g., a human's subjective determination regarding relevant interest categories for each event or venue). Accordingly, this enables computers to perform tasks that might have otherwise been difficult, impractical, or impossible in the past. For example, a computer system can automatically determine interest categories that accurately describe an event or venue, and making recommendations based on the determination.

The details of one or more embodiments are set forth in the accompanying drawings and the description below. Other features and advantages will be apparent from the description and drawings, and from the claims.

### DESCRIPTION OF DRAWINGS

FIG. 1 is a diagram of an example system for implementing social media platform.
FIG. 2 is a diagram of an example social media platform.
FIGS. 3A-3C are diagrams showing an example usage of the social media platform to promote and organize events in an automated manner.
FIGS. 4A-4C are diagrams showing another example usage of the social media platform to promote and organize events in an automated manner, taking in account the privacy preferences of the users of the social media platform.
FIGS. 5A and 5B are diagrams showing an example usage of the social media platform to identify and recommend interest categories to for user in an automated manner.
FIGS. 6-9, 10A, and 10B are diagrams of example user interfaces for interacting with the social media platform.
FIG. 11A and 11B are diagrams showing an example usage of the social media platform to determine characteristics of a venue in an automated manner.
FIG. 12 depicts example venue data structures in the form of a three-dimensional histogram.
FIG. 13 depicts example event data structures for a series of events in the form of a three-dimensional histogram.
FIG. 14 is a flow diagram of an example process for identifying and recommending events to users in an automated manner.
FIG. 15 is a flow diagram of an example process for automatically determining characteristics of a venue
FIG. 16 is a diagram of an example computer system.

Like reference symbols in the various drawings indicate like elements.

### DETAILED DESCRIPTION

A social media platform can enable a user to promote and organize events in an automated manner using social media event items. A social media event item is a portion of data representing an event, and typically includes data such as the date and time of the social media event, a description of the event, one or more social media profiles associated with the event (e.g., social media profiles corresponding to the user who generated the social media event item and other users of the social media platform), and other content pertaining to the social media event. Social media event items are typically stored in a database associated with the social media platform. Maintaining this database may sometimes include the use of data processing rules specific to the data representing events, e.g., the social media event items.

In an example implementation, a user can interact with the social media platform to create a social media event item representing an event. The user can populate the social media event item with information regarding the event, such as the scheduled time of the event, a planned location of the event, a description of the event, and other content regarding the event (e.g., text, images, audio, video, etc.).

After a social media event item has been generated, the user can publicize the social media event item corresponding to the event, such that it is accessible to other users. For example, the user can share the social media event item with others using the social media platform. Recipients can review the social media event item to obtain information regarding the event, discuss the event (e.g., using a discussion engine provided by the social media platform), and/or RSVP to the event (e.g., using an RSVP engine provided by the social media platform).

In some cases, the controlling user can specify one or more interest categories pertaining to, relevant to, and/or otherwise associated with the event. For example, for a baseball game between "Team Sharks" and "Team Jets," a controlling user for the event can specify interest categories such as "Team Sharks," "Team Jets," "baseball," "sports," "outdoors," etc. These interest categories can be presented to each user as a part of the social media event item. This can be beneficial, for example, as it enables potential attendees to quickly assess the nature of the event, and determine whether they would like to attend.

In some cases, the interest categories that are specified by the controlling user for a particular event can be used to automatically recommend or suggest that event to one or more users. For example, each user can interact with the social media platform to create a social media profile (e.g., a personal profile including information regarding the user), and populate her social media profile with one or more interest categories that are of interest to her. For example, a first user may create a social media profile indicating that she is interested in "music," "football," and "movies," while a second user may create a social media profile indicating that she is interested in "food," "baseball," and "reading." Based on this information, the social media platform can automatically determine that the second user may be interested in the baseball game between "Team Sharks" and "Team Jets" (e.g., as the "baseball" interest category is common to both the social media profile of the second user and the social media event item representing the baseball game), and automatically present the social media event item representing the baseball game to the second user.

In some cases, the social media platform can automatically suggest or recommend a particular event based on the interest categories selected by the users who indicated that they plan to attend the event. For example, a number of users may have RSVPed "yes" to the baseball game between "Team Sharks" and "Team Jets" (e.g., indicating that they are planning to attend the event). Further, a significant portion of those users may have each selected a "softball" interest category for their respective social media profiles. Based on this information, the social media platform can automatically determine that users who enjoy softball may also enjoy the baseball game, even though the "softball" interest category was not expressly specified by the controlling user of event. Accordingly, the social media platform can automatically the present baseball game's social media event item to one or more additional users who selected the "softball" interest category in their social media profiles.

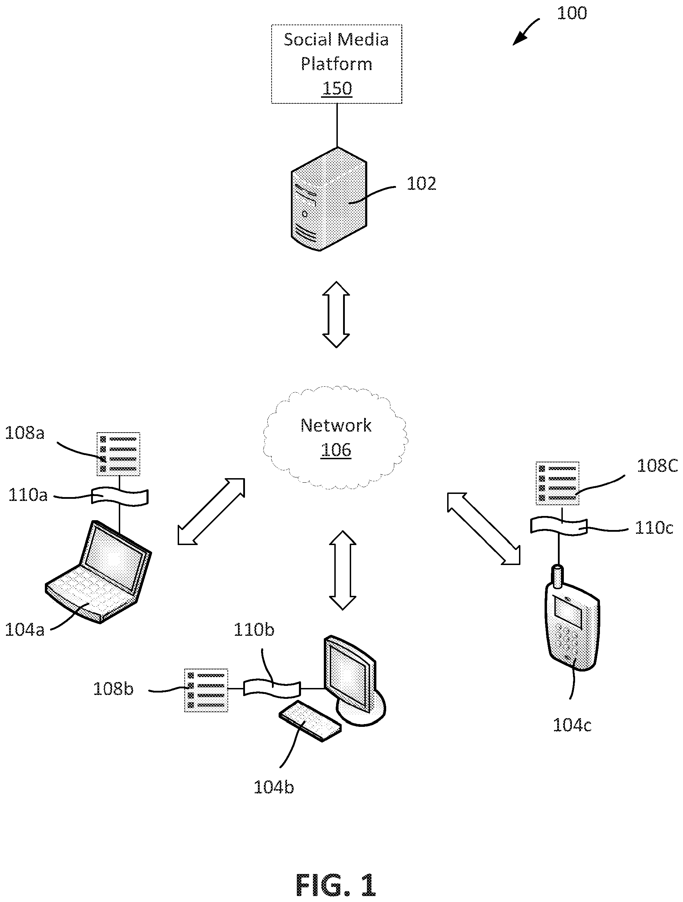

An example system 100 for implementing a social media platform is shown in FIG. 1. The system 100 includes a social media platform 150 maintained on a server system 102 that includes one or more server computers.

The server system 102 is communicatively connected to client devices 104a-c using the network 106. Each client device 104a-c includes a respective user interface 108a-c. Users interact with the user interfaces 108a-c to view data (e.g., data on the server system 102 and the platform 150, and/or data on other the client devices 104a-c). Users also interact with the user interfaces 108a-c to transmit data to other devices (e.g., to the server system 102 and the platform 150, and/or to the other client devices 104a-c). Users interact with the user interfaces 108a-c to issue commands 110a-c (e.g., to the server system 102 and the platform 150, and/or to the other client devices 104a-c). Commands 110a-c can be, for example, any user instruction to the server system 102 and/or to the other client devices 104a-c. In some implementations, a user can install a software application onto a client device 104a-c in order to facilitate performance of these tasks.

A client device 104a-c can be any electronic device that is used by a user to view, process, transmit and receive data. Examples of the client devices 104a-c include computers (such as desktop computers, notebook computers, server systems, etc.), mobile computing devices (such as cellular phones, smartphones, tablets, personal data assistants, notebook computers with networking capability), and other computing devices capable of transmitting and receiving data from the network 106. The client devices 104a-c can include devices that operate using one or more operating system (e.g., Microsoft Windows, Apple OS X, Linux, Unix, Android, Apple iOS, etc.) and/or architectures (e.g., x86, PowerPC, ARM, etc.) In some implementations, one or more of the client devices 104a-c need not be located locally with respect to the rest of the system 100, and one or more of the client devices 104a-c can be located in one or more remote physical locations. In some implementations, the client devices 104a-c can communicate with a geo-positioning system (e.g., a global positioning system [GPS], Wi-Fi triangular system, and so forth) in order to determine its geographical location.

The network 106 can be any communications network through which data can be transferred and shared. For example, the network 106 can be a local area network (LAN) or a wide-area network (WAN), such as the Internet. The network 106 can be implemented using various networking interfaces, for instance wireless networking interfaces (such as Wi-Fi, Bluetooth, or infrared) or wired networking interfaces (such as Ethernet or serial connection). The network 106 also can include combinations of more than one network, and can be implemented using one or more networking interfaces.

The server system 102 is illustrated as a respective single component. However, in practice, it can be implemented on one or more computing devices (e.g., each computing device including at least one processor such as a microprocessor or microcontroller). A server system 102 can be, for instance, a single computing device that is connected to the network 106, and a social media platform 150 can be maintained and operated on the single computing device. In some implementations, the server system 102 can include multiple computing devices that are connected to the network 106, and a social media platform 150 can be maintained and operated on some or all of the computing devices. For instance, the server system 102 can include several computing devices, and the platform 150 can be distributive on one or more of these computing devices. In some implementations, the server system 102 need not be located locally to the rest of the system 100, and portions of a server system 102 can be located in one or more remote physical locations.

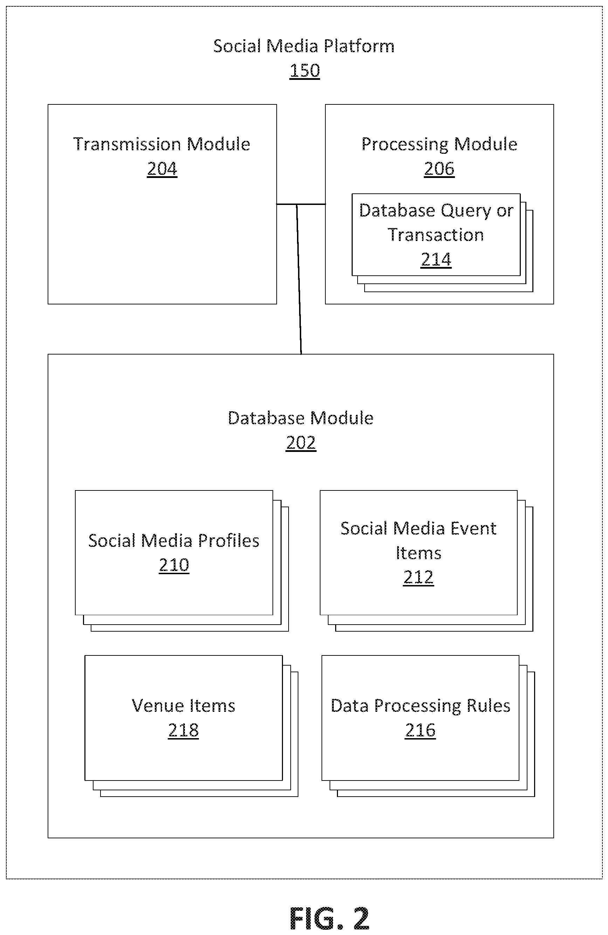

FIG. 2 shows various aspects of the platform 150. The platform 150 includes several modules that perform particular functions related to the operation of the system 100. For example, the platform 150 can include a database module 202, a transmission module 204, and a processing module 206.

The database module 202 maintains information related to one or more users of the system 100. As examples, the database module 202 can store information regarding a user's identity credentials (e.g., user name and password), contact information (e.g., e-mail address, physical address, phone number, and so forth), demographic information (e.g., age, gender, geographical region, and so forth), preferences (e.g., system preferences, privacy preferences, etc.), location (e.g., geographical coordinates, such as those determined using a global positioning system (GPS), Wi-Fi triangulation system, or other geo-positioning system), relationship information (e.g., indications of a user's association with other users, etc.), and other user information (e.g., collections of the user's written content, photographs, videos, audio content, and so forth). As another example, the database module 202 can store information regarding one or more interests of the user (e.g., one or more interest categories selected by the user, such as "reading," "sports," "outdoors," "movies," "country music," etc.). Information regarding each user can be scored in the form of a social media profile 210 (e.g., a portion of data representing a particular user).

The database module 202 can also store information regarding one or more events. As an example, each event can be represented as a respective social media event item 212. Each social media event item 212 can include scheduling information regarding the event. For example, the social media event item 212 can specify the time at which an event is scheduled to occur (e.g., a date and a time of day), a scheduled duration of the event, and/or the time at which an event is scheduled to end. Each social media event item 212 can include content regarding the event. For example, the social media event item 212 can include textual information, images, videos, audio, or other content relating to the event. Each social media event item 212 can also include information regarding the users responsible for controlling the event (e.g., "controlling users") and/or invitees to the event. For example, the social media event item 212 can indicate one or more controlling users of the event (e.g., one or more users responsible for creating, organizing, scheduling, rescheduling, administrating, and/or publicizing the event) and/or one or more users who have been invited to the event. Each social media event item 212 can also include RSVP information regarding one or more of the invitees. For example, the social media event item 212 can indicate one or more users who have been invited to the event and a corresponding status of each invitee with respect to the event (e.g., invited to the event, declined the invitation, accepted the invitation, tentatively accepted the invitation, has not responded to the invitation, etc.). Each social media event item 212 can also indicate interest categories pertaining to, relevant to, and/or otherwise associated with the event (e.g., as specified by a controlling user of the event).

The database module 202 can also store information regarding one or more venues (e.g., locations for holding events, such as concert halls, theaters, stadiums, clubs, parks, event spaces, etc.). As an example, each venue can be represented as a respective venue item 218. Each venue item 218 can include information regarding one or more events associated with the venue. For example, the venue item 218 can specify one or more events that occurred in the past at the venue and/or one or more events that are scheduled to occur in the future at the venue. In some cases, the venue item 218 can identify one or more social media event items 212 corresponding to those events (e.g., via one or more cross-references). Further, each venue item 218 can include content regarding the venue. For example, the venue item 218 can include textual information, images, videos, audio, or other content relating to the venue. Each venue item 218 can also include information regarding the users responsible for controlling or administrating the venue (e.g., "controlling users"), and the users organizing and/or promoting events associated with the venue. For example, the venue item 218 can indicate one or more controlling users of the venue (e.g., one or more users responsible for organizing, administrating, and/or publicizing the venue) and/or one or more users responsible for organizing and/or promoting events that have occurred or are scheduled to occur at the venue. Each venue item 218 can also indicate interest categories pertaining to, relevant to, and/or otherwise associated with the venue (e.g., as specified by a controlling user of the venue).

Although different examples of information are described above, these are merely illustrative. In practice, the database module 202 can store any information related to the users of the platform 150, scheduled events, or any other information pertaining to the platform 150.

Further, the database module 202 can execute database queries or transactions 214. Database queries or transactions can be, for example, commands that specify that particular data be retrieved, modified, and/or deleted from the database module 202. In response, the database module 202 can execute the queries or transactions to fulfill the request, or direct another component of the social media platform 150 to execute the query. In some cases, database queries or transactions 214 can be generated by the processing module 206 (e.g., based on a user's instructions), and transmitted to the database module 202 for execution. In some cases, database queries or transactions 214 can be generated and executed by the processing module 206 directly (e.g., the processing module 206 can directly retrieve, modify, and/or delete data stored in the database module 202).

The transmission module 204 allows for the transmission of data to and from the platform 150. For example, the transmission module 204 can be communicatively connected to the network 106, such that it can transmit data to the client devices 104a-c, and receive data from the client devices 104a-c via the network 106. As an example, information inputted by users on the client devices 104a-c can be transmitted to the platform 150 through the transmission module 204. This information can then be processed (e.g., using the processing module 206) and/or stored (e.g., using the database module 202). As another example, information from the platform 150 (e.g., information stored on the database module 202) can be transmitted to the client devices 104a-c through transmission module 204.

The processing module 206 processes data stored or otherwise accessible to the platform 150. For instance, the processing module 206 can execute automated or user-initiated processes that manipulate data pertaining to one or more users or events. As an example, the processing module 206 can generate and then transmit database queries 214 to database module 202 to retrieve, modify, and/or delete data stored on the database module 202. As another example, the processing module 206 can generate and execute the database queries 214 directly (e.g., the processing module 206 can execute the database queries 214 to directly retrieve, modify, and/or delete data stored in the database module 202). Further, the processing module 206 can process data that is received from the transmission module 204. Likewise, processed data from the processing module 206 can be stored on the database module 202 (e.g., using one or more database queries 214) and/or sent to the transmission module 204 for transmission to other devices. Example processes that can be performed by the processing module 206 are described in greater detail below.

In some cases, the database module 202 and/or the processing module 206 can process data stored in the database module 202 in accordance with one or more data processing rules 216. These data processing rules 216 can specify particular operations that are performed with respect to the data stored by the database module 202 based on particular conditions, criteria, and/or factors. In some cases, data that is processed in accordance with these rules can be rendered more useful to a user and/or can be stored more efficiently by the social media platform 150. As an example, the data processing rules 216 can specify how certain social media event items 212 and/or venue items 218 can be created, modified, and/or presented the users in an automated manner. In some cases, the data processing rules 216 can be stored by the processing module 206 (e.g., so that the processing module 206 can directly access the processing rules 216). In some cases, the data processing rules 216 can be stored by the database module 202. Example implementations of the data processing rules 216 are discussed in greater detail below.

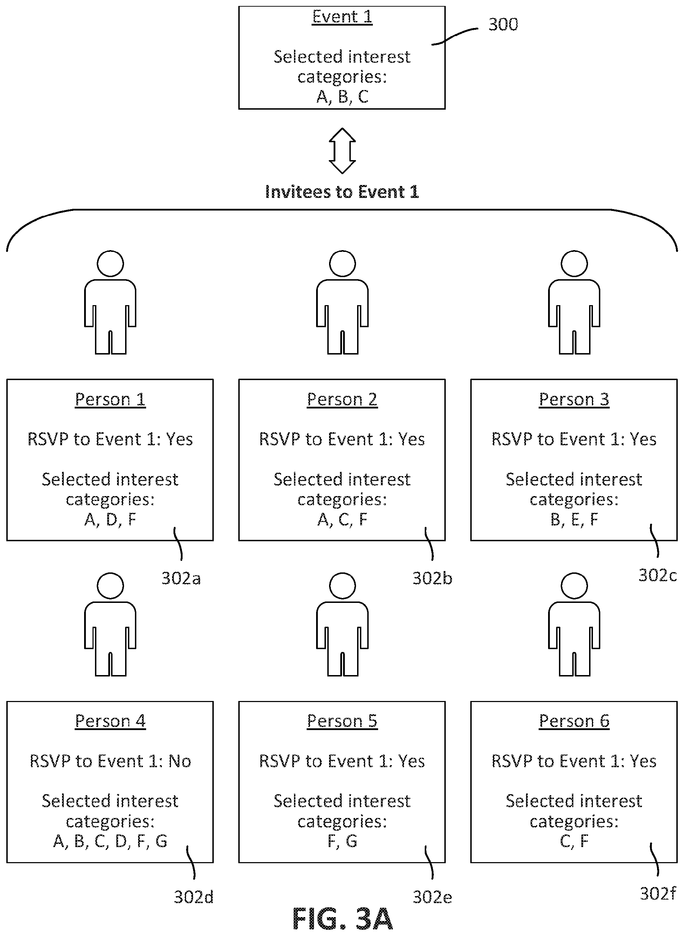

As described above, one or more implementations of the social media platform 150 enable a user to promote and organize events in an automated manner. An example of this functionality is illustrated in FIGS. 3A-3C.

In this example, a user is planning an event, and wishes to promote the event to one or more other users. This user can be referred to as a "controlling user." To facilitate this, the controlling user can interact with the social media platform 150 to create a social media event item 300, and populate the social media event item 300 with information regarding the event. For example, the controlling user can provide a title of the event (e.g., "Event 1"), scheduling information regarding the event, content regarding the event (e.g., textual information, images, videos, audio, or other content relating to the event). Further, the controlling user can indicate one or more interest categories pertaining to, relevant to, and/or otherwise associated with the event. This can be beneficial, for example, as it enables potential attendees to quickly assess the nature of the event, and determine whether they would like to attend. In this example, the user has selected interest categories "A," "B," and "C."

Further, the controlling user can interact with the social media platform 150 to invite one or more other users to the event. For example, the controlling user can share, transmit, or otherwise distribute the social media event item 300 with others. In this example, the controlling user has invited "Person 1," "Person 2," "Person 3," "Person 4," "Person 5," and "Person 6" to the event.

Each user can interact with the social media platform 150 to review the social media event item 300 (e.g., to obtain information regarding the event). Further, each user can indicate whether they plan to attend. For example, each user can submit "RSVP" data regarding the event (e.g., data indicating that she declined the invitation, accepted the invitation, tentatively accepted the invitation, etc.). In this example, "Person 1," "Person 2," "Person 3," "Person 5," and "Person 6" indicated that they plan to attend the event (e.g., submitted a "yes" RSVP), while "Person 4" indicated that she does not plan to attend the event (e.g., submitted a "no" RSVP).

Further, each user of the social media platform 150 can create a personalized social media profile, and populate the social media profile with information regarding herself. For example, each user can provide identity credentials, contact information, demographic information, preferences, location, relationship information, and other user information for inclusion in the social media profile. Further, each user can indicate one or more interests of the user (e.g., one or more interest categories selected by the user). In this example, "Person 1" has selected interest categories "A," "D," and F" for her profile 302a. "Person 2" has selected interest categories "A," "C," and F" for her profile 302b. "Person 3" has selected interest categories "B," "E," and F" for her profile 302c. "Person 4" has selected interest categories "A," "B," "C," "D," "F," and "G" for her profile 302d. "Person 5" has selected interest categories "F" and "G" for her profile 302e. "Person 6" has selected interest categories "C" and "F" for her profile 302f.

Based on the interest categories selected by the controlling user of the social media event item 300 and each of the invited users, the social media platform 150 can automatically determine one or more additional users who may be interested in attending the event. Further, the social media event item 300 can automatically recommend the event to those additional users (e.g., by sharing, transmitting, or otherwise distributing the social media event item 300 to those additional users).

In some cases, the social media platform 150 can generate an event data structure for the event. The event data structure can indicate each of the interest categories that were either (i) selected by the controlling user of the social media event item 300, or (ii) selected by users who have accepted an invitation to the event (e.g., RSVPed "yes"). Further, the event data structure can include a frequency metric for each interest category indicating the number of times that the interest category was selected by the controlling user and/or the users who accepted an invitation to the event. In some cases, this can be presented in the form of a histogram.

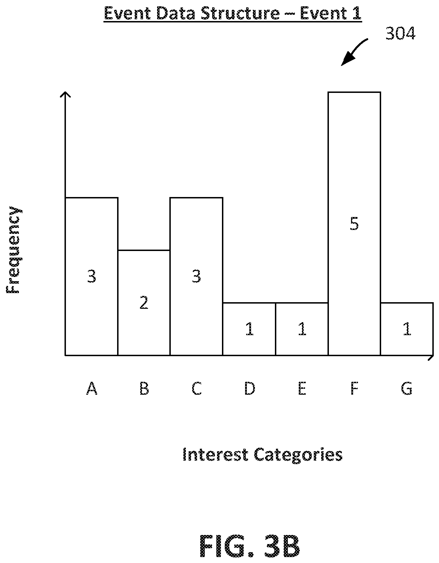

FIG. 3B shows a representation of an example event data structure 304 for the social media event item 300. In this example, the interest category "A" has a frequency metric of 3, as it was selected by the controlling user, as well as by "Person 1" and "Person 2" (users who RSVPed "yes" to the event). Notably, although "Person 4" also selected interest category "A," this selection is not reflected in the event data structure 304, as "Person 4" RSVPed "no" to the event.

Similarly, the interest category "B" has a frequency metric of 2, as it was selected by the controlling user, as well as by "Person 3." Further, the interest category "C" has a frequency metric of 3, as it was selected by the controlling user, as well as by "Person 2" and "Person 6." Further, the interest category "D" has a frequency metric of 1, as it was selected by "Person 1." Further, the interest category "E" has a frequency metric of 1, as it was selected by "Person 3." Further, the interest category "F" has a frequency metric of 5, as it was selected by "Person 1," "Person 2," "Person 3," "Person 5," and "Person 6." Further, the interest category "G" has a frequency metric of 1, as it was selected by "Person 5." As above, although "Person 4" also selected each of these interest categories, these selections is not reflected in the event data structure 304, as "Person 4" RSVPed "no" to the event.

In some cases, the event data structure 304 can be included in the social media event item 300, and presented to users when they review the social media event item 300. For example, when a user accesses the social media event item 300 (e.g., when browsing for information regarding the event using the social media platform 150), the social media platform 150 can display a histogram representing the event data structure 304 (or other graphical and/or textual representation) to the user. This can be beneficial, for example, as it enables potential invitees to identify interest categories relevant to the event, even if those interest categories were not specifically selected by the controlling user of the event. This information can also be presented to the controlling user (e.g., to provide the controlling user with information regarding the interests of the anticipated attendees of her event).

The social media platform 150 can also use the event data structure 304 to identify one or more additional users who may be interested in attending the event. In some cases, this can be performed by deriving a recommendation metric for each potential invitee with respect to the event. The recommendation metric can be, for example, a numerical score reflecting a likelihood that a user may be interested in attending the event. For example, a higher recommendation metric can indicate that a user is more likely to be interested in attending the event, while a lower recommendation metric can indicate that the user is less likely to be interested in attending the event. If the recommendation metric is sufficiently high for a particular user (e.g., above a threshold value), the social media platform 150 can determine that that user is likely to be interested in attending the event (e.g., have a sufficiently high interest in attending the event).

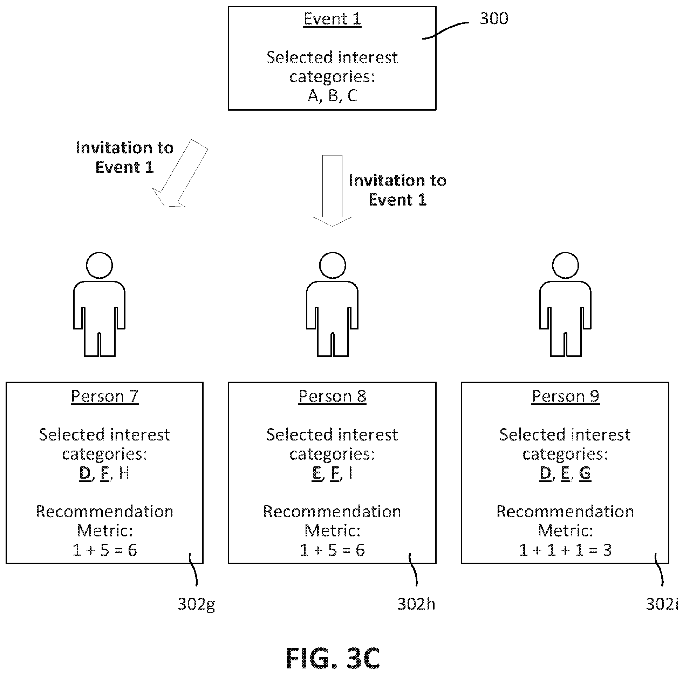

As an example, FIG. 3C shows three potential invitees to the event, "Person 7," "Person 8," and "Person 9." In a similar manner as described above, each of these users can create a personalized social media profile, and populate the social media profile with information regarding herself, such as her personal interests. In this example, "Person 7" has selected interest categories "D," "F," and "H" for her profile 302g. "Person 8" has selected interest categories "E," "F," and I" for her profile 302h. "Person 9" has selected interest categories "D," "E," and G" for her profile 302i.

A recommendation metric for each user with respect to the event can be derived based on the user's interest category selections and the event data structure 304. In some cases, the recommendation metric can be generated by identifying the interest categories common to both the event data structure 304 and the user's social media profile, and summing the frequency metrics for each of those interest categories.

In this example, the interest categories "D" and "F" are common to both the event data structure 304 and "Person 7's" social media profile. Accordingly, a recommendation metric for "Person 7" with respect to the event is 6 (e.g., the frequency metric of interest category "D" [1], plus the frequency metric of interest category "F" [5]).

Further, the interest categories "E" and "F" are common to both the event data structure 304 and "Person 8's" social media profile. Accordingly, a recommendation metric for "Person 8" with respect to the event is 6 (e.g., the frequency metric of interest category "E" [1], plus the frequency metric of interest category "F" [5]).

Further, the interest categories "D," "E," and "F" are common to both the event data structure 304 and "Person 9's" social media profile. Accordingly, a recommendation metric for "Person 9" with respect to the event is 3 (e.g., the frequency metric of interest category "D" [1], plus the frequency metric of interest category "E" [1], plus the frequency metric of interest category "G" [1]).

As the recommendation metrics for "Person 7" and "Person 8" with respect to the event are higher than that of "Person 9," the social media platform 150 determines that "Person 7" and "Person 8" are more likely to be interested in attending the event than "Person 9."

Further, the social media platform 150 can automatically recommend the event to one or more users based on the recommendation metrics. For instance, if the recommendation metric for a particular user is above a threshold value, the social media platform 150 can share, transmit, or otherwise distribute the social media event item 300 to that user. In practice, the threshold value can vary, depending on the implementation. In some cases, the threshold value can be specified by an administrator or developer of the social media platform 150. In some cases, the threshold value can be specified by one or more users of the social media platform 150 (e.g., a controlling user).

In this example, the threshold value is 5. Thus, the social media platform 150 can automatically transmit the social media event item 300 to "Person 7" and "Person 8" (as the recommendation metrics for these users exceeds the threshold value). However, the social media platform 150 can refrain from automatically transmitting the social media event item 300 to "Person 9" (as the recommendation metric for this user does not exceed the threshold value).

In some cases, the social media platform 150 can also modify the recommendation metrics based on a geographical location of each user in with respect to planned geographical location of the event. For example, if a user is located in relatively close to the planned location of the event, the social media platform 150 can increase the event's recommendation metric for that user. If a user is located in relatively distant from the anticipated location of the event, the social media platform 150 can decrease the event's recommendation metric for that user. This can be useful, for example, as it enables the social media platform 150 to recommend events that are more likely to be relevant to its users (e.g., events that are relatively nearby the users). In some cases, the social media platform 150 can recommend only events that are planned to occur within a particular geographical area with respect to a user (e.g., within a particular distance radius from the location of the user).

In some cases, the social media platform 150 can initially generate an event data structure for an event data item, and modify the event data structure one or more times after it has been generated.

In some cases, the social media platform 150 can monitor for transactions causing a change to the data of the one or more databases (e.g., transactions executed by the processing module 206 with respect to data stored by the database module 202, such as the social media profiles 210, social media event items 212, and/or venue items 218). If a transaction meets particular trigger criteria, the social media platform 150 can modify one or more event data structures in response. For instance, if a transaction modifies a data field that will affect an event data structure (e.g., a transaction correction to a user RSVPing "yes" to an event, a user selecting additional interest categories for her social media profile, or other action that can impact the histogram for an event), the social media platform 150 (e.g., using the processing module 206) can mark that transaction with a specific flag, such as a "trigger" flag. When each transaction successfully completes, the social media platform 150 (e.g., using the processing module 206) checks for flags on that transaction, and then calls certain functions based on any identified flags. These functions create their own transactions, which when executed, update the appropriate event data structures accordingly (e.g., updating the histogram for the relevant events). This can be useful, for example, as it enables the social media platform 150 to quickly confirm any changes that a user has made, prior to updating the event data structures (which may take a relatively longer amount of time to complete). For example, if a user adds a new interest category to her social media profile, the social media platform 150 can quickly confirm the change to the user (such that the user does not have to wait for a long period of time), and subsequently update one or more event data structures based on the user's changes while the user conducts other tasks.

As an example, if the controlling user modifies the interest category selections of the event data item, in response, the social media platform 150 can modify the event data structure to reflect these changes (e.g., by adding new interest categories to the event data structure, removing interest categories from the event data structure, and/or modifying the frequency metrics of interest categories in the event data structure). As another example, if one or more additional users indicate that they plan on attending the event, in response, the social media platform 150 can modify the event data structure to reflect these changes (e.g., by adding new interest categories to the event data structure and/or incrementing the frequency metrics of interest categories selected by the additional users in the event data structure). As another example, if one or more users indicate that they no longer plan on attending the event, the social media platform 150 can modify the event data structure to reflect these changes (e.g., by removing interest categories from the event data structure and/or decrementing the frequency metrics of interest categories selected by those users in the event data structure). As another example, if one or more users who plan on attending the event modify the interest category selections in their personal social media profiles, the social media platform 150 can modify the event data structure to reflect these changes (e.g., by adding new interest categories to the event data structure, removing interest categories from the event data structure, and/or modifying the frequency metrics of interest categories in the event data structure). This can be useful, for example, as it enables the social media platform 150 to present accurate information regarding each of the events, and to make more accurate recommendations to its users. In some cases, these modifications can be made only with respect to events that have not yet occurred.

In some cases, the social media platform 150 can update event data items in real time or substantially real time. For example, the social media platform can monitor transactions to determine whether a particular transaction meets one or more trigger criteria

(e.g., a controlling user modifies the interest category selections of the event data item, one or more additional users indicate that they plan on attending the event, one or more users indicate that they no longer plan on attending the event, one or more users who plan on attending the event modify the interest category selections in their personal social media profiles, etc.). In response, the social media platform 150 can modify the corresponding event data structure immediately (or substantially immediately). This can be useful, for example, in enabling the social media platform 150 to maintain continuously up to date information regarding each of the organized events.

In some cases, the social media platform 150 can update event data items periodically. For example, the social media platform 150 can determine whether one or more trigger criteria have been met according to a recurring schedule (e.g., once a second, once a minute, once an hour, once a day, or according to some other schedule). Upon determining that a particular trigger criterion is met, the social media platform 150 can modify the corresponding event data structure in response. This can be useful, for example, in enabling the social media platform 150 to maintain up to date information regarding each of the organized events according to a more predictable schedule, and in a manner that may reduce computation costs (e.g., compared to updating in real time).

This can also be useful, for example, in improving the integrity of data in the social media platform 150. For example, during operation, the social media platform 150 may behave anomalously, resulting in instability (e.g., system crashes). As described above, the social media platform 150 can update event data items in real time or substantially real time (e.g., by monitoring transactions to determine whether a particular transaction meets one or more trigger criteria, and if so, modifying the corresponding event data structure immediately in response). However, if the social media platform 150 were to experience a system crash after the performance of a transaction, but prior to the event data structure being updated in response, the event data structure would not reflect the performance of that transaction. Further, as the social media event items are updated in real time or substantially real time, and not according to a predictable schedule, it would be difficult to determine whether the social media event item had been properly updated. In contrast, if the social media platform 150 were to update event data items periodically (e.g., in accordance with a predictable schedule), it becomes easier to determine whether each social media event item had been properly updated. For example, the time at which the system crashed can be compared to the scheduled update time. If the crash occurred after the scheduled update item, the social media platform 150 can determine that the scheduled update occurred. However, if the crash occurred prior to the scheduled update item, the social media platform 150 can determine that the scheduled update did not occur, and can take corrective action in response (e.g., queue another update during the next scheduled update item). Thus, the reliability of the data in the social media platform 150 can be improved. Nevertheless, this does not preclude the social media platform 150, in some instances, from updating event data items in real time or substantially real time (e.g., when continuously up to date information is more desirable than improved data integrity).

In the example shown in FIGS. 3A-3C, the performance metric of each interest category is incremented by a particular amount (e.g., 1) for each selection by a controlling user and/or a user planning to attend an event. In some cases, the performance metric of each interest category can be incremented by a different amount for each selection of a user tentatively planning to attend an event. For example, if a first user indicates that she plans to attend an event (e.g., by RSVPing "yes"), each of the first user's interest category selections in her personal social media profile can increment the frequency metric of those categories in the event data structure by a first unit (e.g., 1). If a second user indicates that she tentatively plans to attend an event (e.g., by RSVPing "maybe"), each of the second user's interest category selections in her personal social media profile can increment the frequency metric of those categories in the event data structure by a second unit (e.g., 0.5). This can be useful, for example, as it enables the social media platform 150 to differentiate between users who are likely to attend an event and user who are less likely to attend an event, and generate recommendations that account for these differences. Although example units are described above (e.g., 1 and 0.5), these are merely illustrative examples. In practice, each unit can differ, depending on the implementation.

As described above, an event data structure can be presented to users when they review a social media event item (e.g., in the form of a histogram). This can be beneficial, for example, as it enables potential invitees to identify interest categories relevant to the event, even if those interest categories were not specifically selected by the controlling user of the event. However, this also has the effect of revealing the collective interests of the users who plan to attend the event. In some cases, this might enable an observer to attribute particular interest categories to particular users. To some users, this might be undesirable. For example, a user might be sensitive about being associated with a particular interest category, and may wish to keep her association private. As another example, a user might generally prefer to keep her interests private, such that her personal information is not widely distributed to others.

In some cases, to account for this possibility, the social media platform 150 can be configured such that users can specify whether each of the interest categories in their social media profiles should be publicly displayed to users. For example, when a user is selecting interest categories for inclusion in their social media profiles, they can also indicate whether each interest category should be marked as "public" (e.g., so that other users can see her selection of that interest category when they view her social media profile), or "private" (e.g., so that the interest category is hidden from other users when they view her social media profile).

Further, the social media platform 150 can be configured to generate two different event data structures for a particular event. A first event data structure (e.g., an "internal" event data structure) can be similar to that described above. For example, the internal event data structure can indicate each of the interest categories selected by the controlling user of an event and/or the one or more users who have indicated that they plan to attend the event (e.g., RSVPed "yes"). Further, in a similar manner as described above, the internal event data structure can be used to identify one or more additional users who may be interested in attending the event, and recommend that event to those users. Accordingly, the social media platform 150 uses all available information to make recommendations to other users. However, the social media platform 150 does not publicly display the internal event data structure to users (e.g., when users browse the social media event item).

Instead, the social media platform 150 generates a second event data structure (e.g., a "public" event data structure) for public display to users. The public event data structure is similar to the first event data structure, but reflects the privacy preferences of each user (e.g., the "public" and "private" selections of each user). For example, if a particular user indicated that she plans on attending an event, the frequency metrics for each of the user's "public" interest categories are incremented in the public event data structure (e.g., in a similar manner as described above). However, the frequency metrics for each of the user's private interest categories remains unchanged (e.g., as if the user had not selected the private interest categories at all). Accordingly, the public event data structure does not reveal the user's "private" interest category selections publicly to other users, making it more difficult for observers to attribute particular interest categories to particular users.

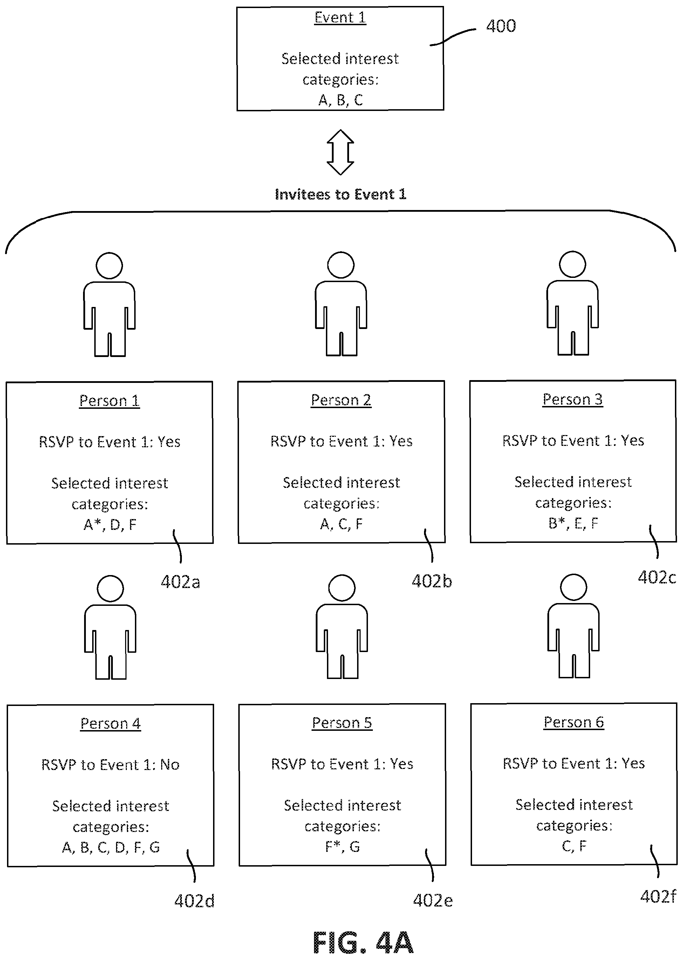

An example of this functionality is illustrated in FIGS. 4A-4C. In a similar manner as described with respect to FIGS. 3A-3C, a controlling user is planning an event, and wishes to promote the event to one or more other users. To facilitate this, the controlling user can interact with the social media platform 150 to create a social media event item 400, and populate the social media event item 400 with information regarding the event. In this example, the social media event item 400 is similar to the social media event item 300 described above. For example, here, the user has selected interest categories "A," "B," and "C."

Further, the controlling user can interact with the social media platform 150 to invite one or more other users to the event. For example, the controlling user can share, transmit, or otherwise distribute the social media event item 400 with others. In this example, the controlling user has again invited "Person 1," "Person 2," "Person 3," "Person 4," "Person 5," and "Person 6" to the event.

Similarly, each user can interact with the social media platform 150 to review the social media event item 400 (e.g., to obtain information regarding the event). Further, each user can indicate whether they plan to attend. In this example, "Person 1," "Person 2," "Person 3," "Person 5," and "Person 6" have again indicated that they plan to attend the event (e.g., submitted a "yes" RSVP), while "Person 4" has again indicated that she does not plan to attend the event (e.g., submitted a "no" RSVP).

Similarly, each user of the social media platform 150 can create a personalized social media profile, and populate the social media profile with information regarding herself. For example, each user can indicate one or more interests of the user (e.g., one or more interest categories selected by the user). However, each user can also specify whether a particular interest category is "public" (e.g., so that other users can see her selection of that interest category when they view her social media profile), or "private" (e.g., so that the interest category is hidden from other users when they view her social media profile).

In this example, "Person 1" has again selected interest categories "A," "D," and F" for her profile 402a, but has specified that her selection of interest category "A" should be private (indicated by an asterisk). "Person 2" has again selected interest categories "A," "C," and F" for her profile 402b. "Person 3" has again selected interest categories "B," "E," and F" for her profile 402c, but has specified that her selection of interest category "B" should be private (indicated by an asterisk). "Person 4" has again selected interest categories "A," "B," "C," "D," "F," and "G" for her profile 402d. "Person 5" has again selected interest categories "F" and "G" for her profile 402e, but has specified that her selection of interest category "F" should be private (indicated by an asterisk). "Person 6" has again selected interest categories "C" and "F" for her profile 302f.

The social media platform 150 generates an internal event data structure and a public event data structure based on these selections.

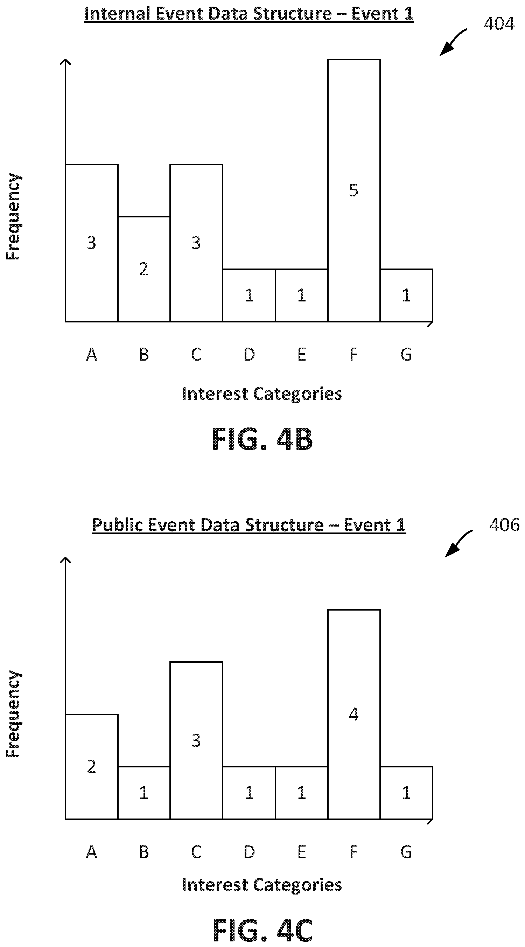

FIG. 4B shows a representation of an example internal event data structure 404 for the social media event item 400. In this example, the interest category "A" again has a frequency metric of 3, as it was selected by the controlling user, as well as by "Person 1" and "Person 2." Further, the interest category "B" again has a frequency metric of 2, as it was selected by the controlling user, as well as by "Person 3." Further, the interest category "C" again has a frequency metric of 3, as it was selected by the controlling user, as well as by "Person 2" and "Person 6." Further, the interest category "D" again has a frequency metric of 1, as it was selected by "Person 1." Further, the interest category "E" again has a frequency metric of 1, as it was selected by "Person 3." Further, the interest category "F" again has a frequency metric of 5, as it was selected by "Person 1," "Person 2," "Person 3," "Person 5," and "Person 6." Further, the interest category "G" again has a frequency metric of 1, as it was selected by "Person 5." Similarly, although "Person 4" also selected each of these interest categories, these selections is not reflected in the event data structure 404, as "Person 4" RSVPed "no" to the event.

In a similar manner as described with respect to the event data structure 304, the internal event data structure 404 is used to identify one or more additional users who may be interested in attending the event. For example, the social media platform 150 can use the event data structure 404 to derive a recommendation metric for each potential invitee with respect to the event. If the recommendation metric is sufficiently high for a particular user (e.g., above a threshold value), the social media platform 150 can determine that that user may be interested in attending the event. However, the social media platform 150 does not publicly display the internal event data structure 404 to users (e.g., when users browse the social media event item 400).

FIG. 4C shows a representation of an example public event data structure 406 for the social media event item 400. The public event data structure 406 is generally similar to the internal event data structure 404. However, as "Person 1," "Person 4," and "Person 5" specified that their selections of interest categories "A," "B" and "F" are private, respectively, the frequency metrics for each of the categories is smaller by one (compared to that of the internal event data structure 404.

In some cases, the public event data structure 406 can be presented to one or more users when they review the social media event item 400. For example, when a controlling user accesses the social media event item 400 (e.g., when reviewing information regarding an event that he is promoting), the social media platform 150 can display a histogram representing the public event data structure 406 (or other graphical and/or textual representation) to the controlling user. As another example, when a general user (e.g., an invitee or potential attendee) accesses the social media event item 400 (e.g., when browsing for information regarding an event that he is considering attending), the social media platform 150 can also display a histogram representing the public event data structure 406 (or other graphical and/or textual representation) to the user. In the both cases, the public event data structure 406 is generated such that users' private interest categories are not reflected in the corresponding frequency metrics. Accordingly, it is more difficult for observers to attribute particular interest categories to particular users based on the public available information regarding the event. In some cases, the public event data structure 406 can be presented to the controlling user associated with the social media event item 400, but withheld from general users (e.g., invitees, potential attendees, etc.). In some cases, the public event data structure 406 can be presented to the controlling user associated with the social media event item 400, as well as to general users.

In some cases, the social media platform 150 can determine interest categories that may be relevant to a user, even if the user did not specifically select those interest categories for her social media profile. In some cases, this can be performed by identifying each of the events that a user plans to attend (e.g., events for which the user RSVPed "yes"), and identifying popular interest categories among other users who are also attending those events. If a particular interest category is sufficiently common among those other users (e.g., the frequency metric of the interest category is greater than a particular threshold value), the social media platform 150 can recommend that interest category to the user. For example, the social media platform can suggest that the user add the interest category to her social media profile.

In some cases, this can be performed by generating, for each user, a user data structure representing the interest categories that may be relevant to that particular user. The user data structure can indicate each of the interest categories that were included in one or more event data structures for events that the user plans to attend. Further, the event data structure can include a frequency metric for each interest category (e.g., combining or summing the frequency metrics of each of the event data structures across each of the interest categories). In some cases, this can be presented in the form of a histogram.

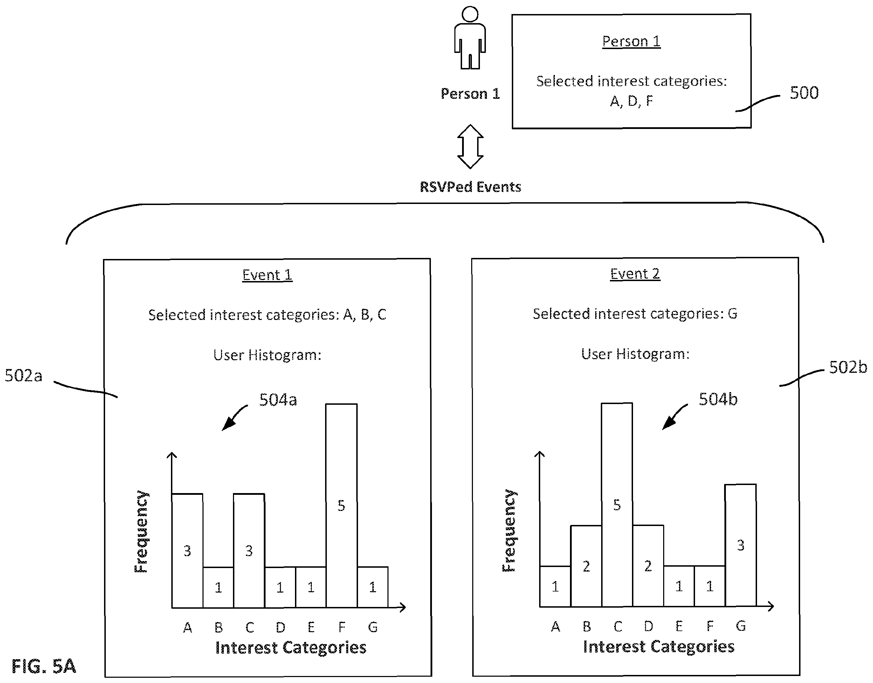

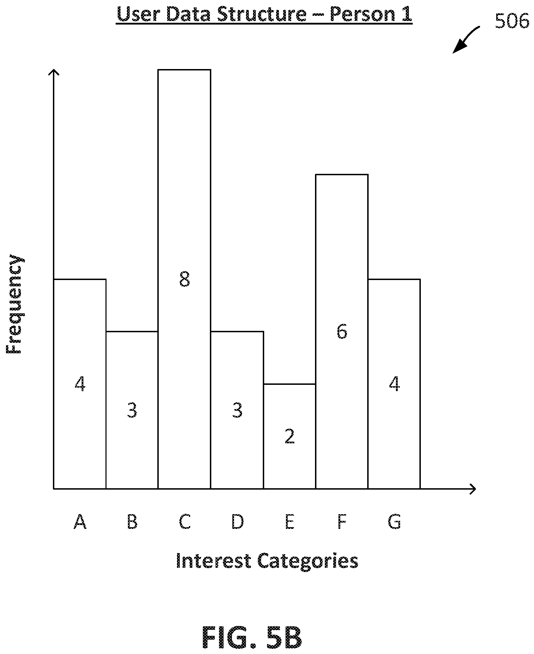

An example of this functionality is illustrated in FIGS. 5A and 5B. In this example, a user ("Person 1") has created a personal social media profile 500 on the social media platform 150, and has selected interest categories "A," "D," and "F" for inclusion in the social media profile 500. Further, the user has indicated that she plans to attend two events, "Event 1" and "Event 2" (e.g., by RSVPing "yes" to these events).

"Event 1" is represented by a social media event item 502a, and "Event 2" is represented by a social media event item 502b. The social media event items 502a and 502b include corresponding event data structure 504a and 504b, respectively. The event data structures 504a and 504b can be generated, for example, according to the techniques described herein (e.g., as described with respect to FIGS. 3A-3C). For example, the event data structures 504a and 504b can indicate each of the interest categories that were either (i) selected by the controlling user of the respective social media event item, or (ii) selected by users who have accepted an invitation to the respective event. Further, the event data structures 504a and 504b can include a frequency metric for each interest category indicating the number of times that the interest category was selected by the controlling user of the respective social media event item and/or the users who accepted an invitation to the respective event. In some cases, these also can be presented in the form of a histogram.

FIG. 5B shows a representation of an example user data structure 506 for "Person 1." In this example, the interest category "A" has a frequency metric of 4 (the sum of the frequencies metrics for interest category "A" across the event data structures 504a and 504b). Similarly, the interest category "B" has a frequency metric of 3 (the sum of the frequencies metrics for interest category "B" across the event data structures 504a and 504b). Further, the interest category "C" has a frequency metric of 8 (the sum of the frequencies metrics for interest category "C" across the event data structures 504a and 504b). Further, the interest category "D" has a frequency metric of 3 (the sum of the frequencies metrics for interest category "D" across the event data structures 504a and 504b). Further, the interest category "E" has a frequency metric of 2 (the sum of the frequencies metrics for interest category "E" across the event data structures 504a and 504b). Further, the interest category "F" has a frequency metric of 6 (the sum of the frequencies metrics for interest category "F" across the event data structures 504a and 504b). Further, the interest category "G" has a frequency metric of 4 (the sum of the frequencies metrics for interest category "G" across the event data structures 504a and 504b).

The social media platform 150 can use the user data structure to identify one or more interest categories that may be relevant to the user, even if the user did not specifically select those interest categories for her social media profile. As an example, the social media platform 150 can generate a list of suggested interest categories for the user, and presenting the list to the user for selection. The list can be determined, for instance, by identifying the interest categories that the user has not yet included in her social media profile. Further, the list can be sorted, such that the interest categories that are more likely to be relevant to the user are prioritized and/or displayed more prominently to the user (e.g., presented closer to the beginning of the list), while the interest categories that are less likely to be relevant to the user are de-prioritized and/or displayed less prominently to the user (e.g., presented closer to the end of the list). The user can select one or more of the interest categories from the list to add those interest categories to her profile.

As another example, the social media platform 150 can determine whether a frequency metric for a particular interest category is sufficiently high (e.g., above a threshold value). If so (and if the user has not already included that interest category to her social media profile), the social medial platform 150 can determine that that user may be interested in including that interest category in her profile. Further, the social media platform 150 can automatically recommend the interest category to the user (e.g., transmit a notification or other message to the user suggesting that the user include the interest category in her social media profile 500). In practice, the threshold value can vary, depending on the implementation. In some cases, the threshold value can be specified by an administrator or developer of the social media platform 150. In some cases, the threshold value can be specified by one or more users of the social media platform 150 (e.g., a controlling user).

In this example, the threshold value is 5. Thus, the social media platform 150 can automatically suggest the interest category "C" to "Person 1" (as the frequency metric for interest category "C" exceeds the threshold value). Further, although the frequency metric for interest category "F" also exceeds the threshold value, the social media platform 150 does not automatically recommend interest category "F" to "Person 1," as she has already included it in her social media profile 500.

As described herein, users can interact with the social media platform 150 using a user interface presented by the social media platform 150. Example user interfaces (e.g., the user interfaces 600, 700, 800, 900, 1000, and 1050) are described below. In some cases, the user interfaces described herein can be implemented as a part of the user interfaces 108a-c shown in FIG. 1.

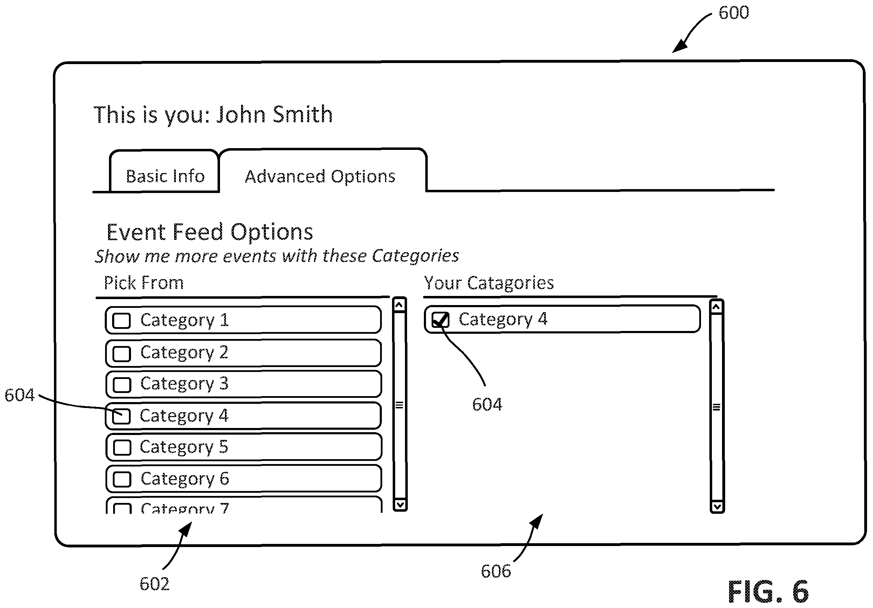

An example user interface 600 enabling a user to select interest categories for inclusion in her social media profile is shown in FIG. 6. The user interface 600 includes a menu pane 602 showing each of the interest categories available for selection. A user can select one of the interest categories shown in the menu pane 602 (e.g., by clicking on or "checking" a selection box 604 next to the desired interest category using an input device). In response, the selected interest category is moved to the selection pane 606 and associated with the user's social media profile. The user can select multiple interest categories in this manner. Further, the user can remove selected interest categories from the selection pane 606 and back to the menu pane 602 (e.g., by "unchecking" the selection boxes 604 next to the interest categories). Removed interest categories are removed from the user's social media profile.

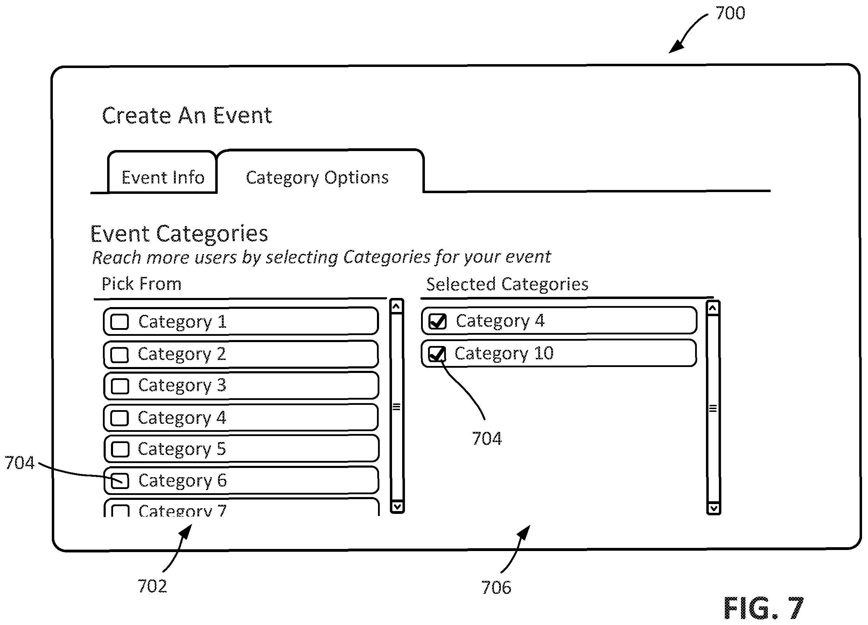

An example user interface 700 enabling a user to select interest categories for inclusion in a social media event item is shown in FIG. 7. The user interface 700 includes a menu pane 702 showing each of the interest categories available for selection. A user (e.g., a controlling user for a social media event item) can select one of the interest categories shown in the menu pane 702 (e.g., by clicking on or "checking" a selection box 704 next to the desired interest category using an input device). In response, the selected interest category is moved to the selection pane 706 and associated with the social media event item. The user can select multiple interest categories in this manner. Further, the user can remove selected interest categories from the selection pane 706 and back to the menu pane 702 (e.g., by "unchecking" the selection boxes 604 next to the interest categories). Removed interest categories are removed from the social media event item.

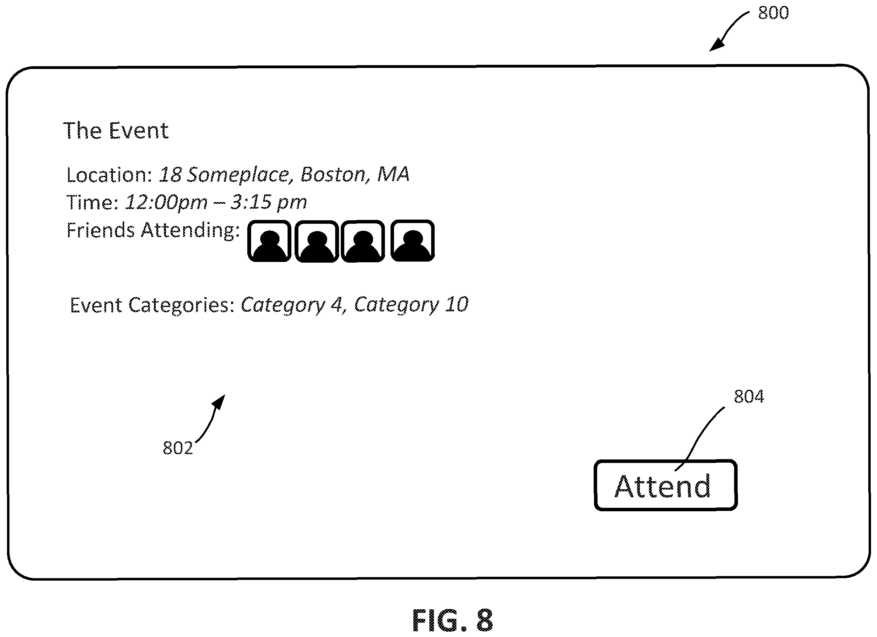

An example user interface 800 enabling a user to view information regarding an event (e.g., information from a social media event item) is shown in FIG. 8. The user interface 800 includes a description pane 802 displaying information regarding the event (e.g., the title of the event, the location of the event, the schedule time and duration of the event, one or more of the user's "friends" who plan on attending the event, etc.) The description pane 802 also indicates one or more interests categories associated with the event (e.g., one or more interest categories selected by a controlling user). A user can indicate that she plans to attend the event by selecting an "attend" command 804.

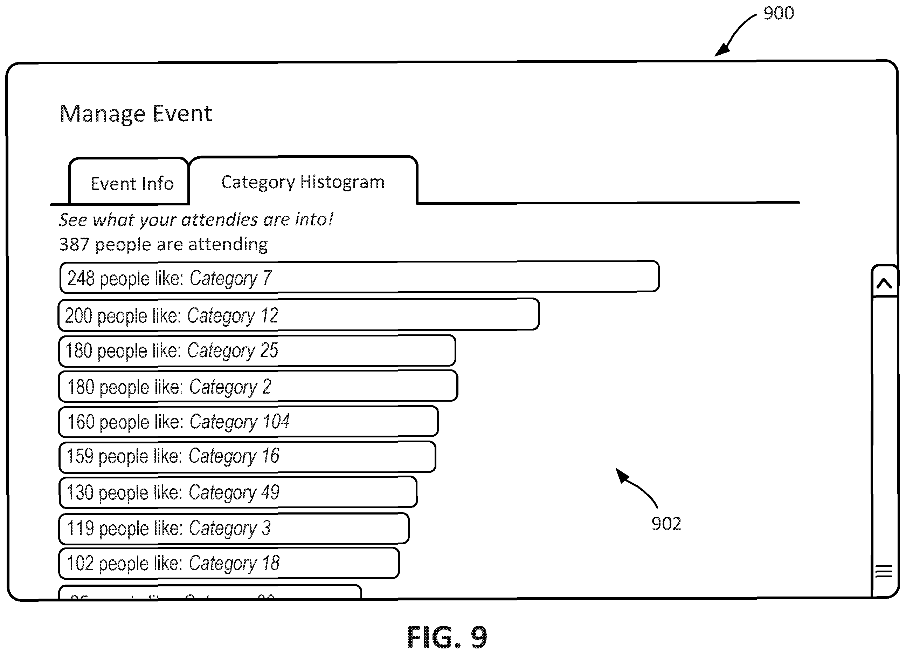

An example user interface 900 enabling a user (e.g., a controlling user) to view content from an event data item is shown in FIG. 9. The user interface 900 includes a histogram pane 902 displaying information regarding the users who plan to attend an event (e.g., "attendees"). The histogram pane 902 includes an indication of each interest category that has been selected by at least one "attendee" for inclusion in their personal social media profile, and frequency metrics indicating the number of times that each interest category had been selected among the attendees. The histogram pane 902 can sort the interest categories based on the frequency metrics (e.g., interest categories having the highest frequency are displayed first), such that a user can more readily determine which categories are popular amongst the attendees of the event.

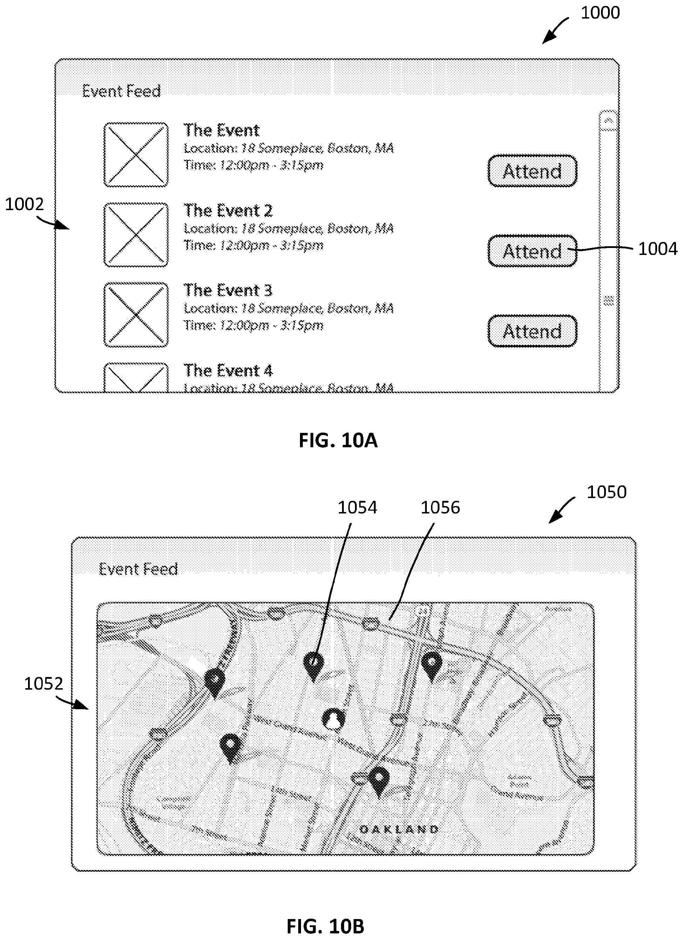

An example user interface 1000 enabling a user to browse information regarding multiple events is shown in FIG. 10A. The user interface 1000 includes a feed pane 1002 showing events available for the user to attend. In some cases, the events shown in the feed pane 1002 can be selected by the social media platform 150 based on the interest categories selected by the user and/or based on the event recommendation techniques described herein. A user can select an event from the feed pane 1002 to view more information regarding the event (e.g., using the user interface 800 shown in FIG. 8). The user can also indicate that she plans to attend the event by selecting an "attend" command 1004.

Another example user interface 1050 enabling a user to browse information regarding multiple events is shown in FIG. 10B. The user interface 1050 includes a map pane 1052 showing the planned geographical locations of events available for the user to attend (e.g., using markers 1054 overlaid onto a graphical map 1056). In some cases, the events shown in the map pane 1052 can be selected by the social media platform 150 based on the interest categories selected by the user and/or based on the event recommendation techniques described herein. A user can select a marker 1054 from the map pane 1052 to view more information regarding a particular event (e.g., using the user interface 800 shown in FIG. 8).

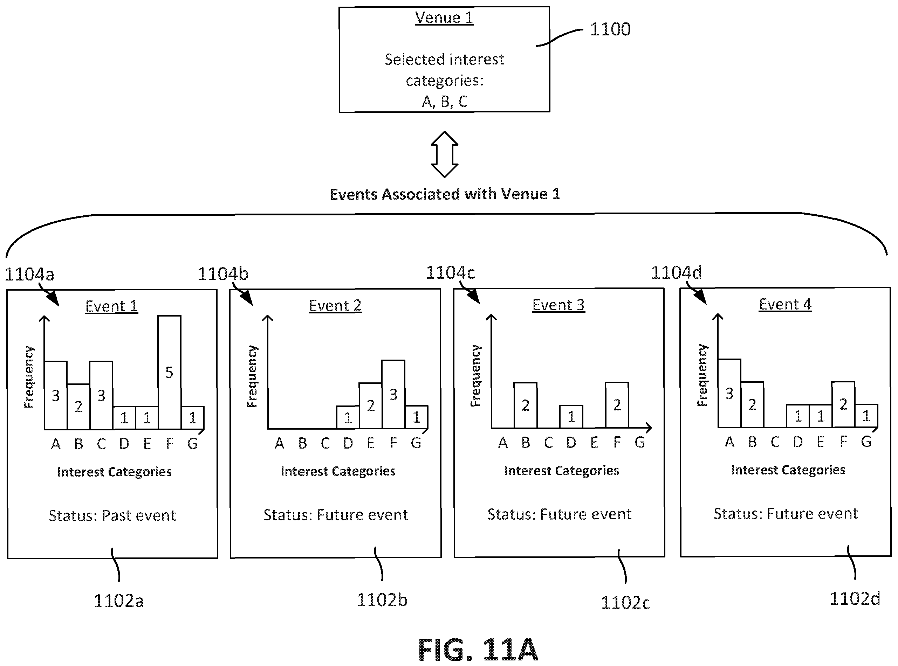

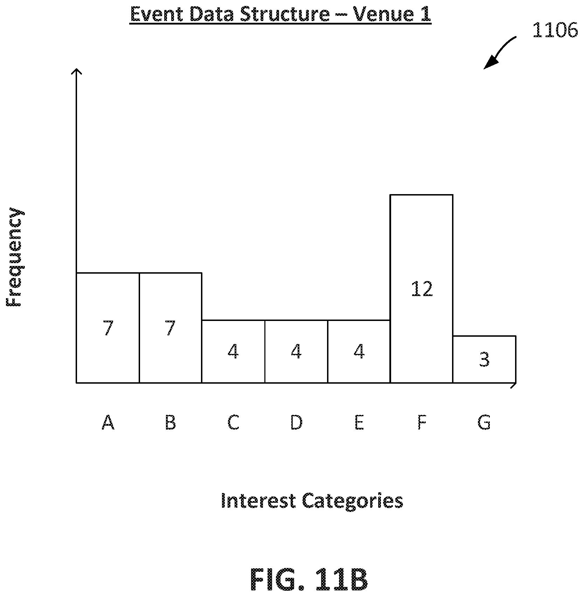

In some implementations, the social media platform 150 can enable users to determine information regarding a venue (e.g., identify interest categories that are associated with the venue and/or events associated with the venue) in an automated manner. An example of this functionality is illustrated in FIGS. 11A and 11B.

In this example, a user is managing a venue (e.g., a location for holding events, such as a concert hall, a theater, a stadium, a club, a park, an event space, etc.), and wishes to promote the venue to one or more other users (e.g., potential attendees, event organizers, event promoters, etc.). This user can be referred to as a "controlling user." To facilitate this, the controlling user can interact with the social media platform 150 to create a venue item 1100, and populate the venue item 1100 with information regarding the venue. For example, the controlling user can provide a name of the venue (e.g., "Venue 1"), information regarding event and future events associated with the venue, and content regarding the venue (e.g., textual information, images, videos, audio, or other content relating to the venue). Further, the controlling user can indicate one or more interest categories pertaining to, relevant to, and/or otherwise associated with the venue. This can be beneficial, for example, as it enables the controlling user to determine demographic information and trends regarding the venue. This also enables other users (e.g., the controlling user, potential attendees, event organizers, event promoters, etc.) to quickly assess the nature of the venue, and determine whether they would like to attend events at the venue and/or organize events at the venue. In this example, the user has selected interest categories "A," "B," and "C."

Further, the controlling user can interact with the social media platform 150 to indicate one or more events that have occurred and/or are scheduled to occur. In some cases, one or more of the events can correspond to social media event items (e.g., as shown and described with respect to FIGS. 2, 3A-3C, 4A-4C, 5A and 5B). In this example, the controlling user has indicated that one event has occurred in the past ("Event 1," corresponding to a social media event item 1102a). Further, the controlling user has indicated that three events are scheduled to occur in the future ("Event 2," "Event 3," and "Event 4," corresponding to social media event items 1102b, 1102c, and 1102d, respectively).

In some cases, controlling users for events (e.g., organizers, event promoters, etc.) can specify the venues associated with their events (e.g., when populating the social media event items). The social media platform 150 can automatically generate one or more venue items based on the input. For example, the social media platform 150 can identify each of the events that occurred or are schedule to occur at a particular venue, and generate a venue item specifying each of those events.

As described herein, users can interact with the social media platform 150 to review the social media event items (e.g., to obtain information regarding the event). Further, each user can indicate whether they plan to attend. For example, each user can submit "RSVP" data regarding the event (e.g., data indicating that she declined the invitation, accepted the invitation, tentatively accepted the invitation, etc.).

Further, as described herein, the social media platform 150 can generate an event data structure for each event. The event data structure can indicate each of the interest categories that were either (i) selected by the controlling user of the social media event item (e.g., a user responsible for organizing and/or promoting the event) when populating the social media event item, or (ii) selected by users who have accepted an invitation to the event (e.g., RSVPed "yes") when populating their user profiles. Further, the event data structure can include a frequency metric for each interest category indicating the number of times that the interest category was selected by the controlling user for the event (e.g., when populating the social media event item) and/or the users who accepted an invitation to the event (e.g., when populating their user profiles). In some cases, this can be presented in the form of a histogram. In this example, each of the social media event items 1102a-1102d includes a respective event data structure 1104a-d in the form of a histogram.

In some cases, the social media platform 150 can generate a venue data structure for the venue. The venue data structure can indicate each of the interest categories that were (i) selected by the controlling user of the venue when populating the venue item, (ii) selected by the controlling users of the social media event items associated with the venue when populating the social media event items, or (iii) selected by users who have accepted an invitation to the events associated with the venue (e.g., RSVPed "yes") when populating their user profiles. Further, the venue data structure can include a frequency metric for each interest category indicating the number of times that the interest category was selected in this manner. In some cases, this also can be presented in the form of a histogram.

FIG. 11B shows a representation of an example venue data structure 1106 for the venue item 1100. In this example, the interest category "A" has a frequency metric of 7, as it was selected by the controlling user of "Venue 1," and selected 6 times by users associated with "Event 1" and "Event 4." Similarly, the interest category "B" has a frequency metric of 7, as it was selected by the controlling user of "Venue 1," and selected 6 times by users associated with "Event 1," "Event 3," and "Event 4." Further, the interest category "C" has a frequency metric of 4, as it was selected by the controlling user of "Venue 1," and selected 3 times by users associated with "Event 1." Further, the interest category "D" has a frequency metric of 4, as it was selected 4 times by users associated with "Event 1," "Event 2," "Event 3," and "Event 4." Further, the interest category "E" has a frequency metric of 4, as it was selected 4 times by users associated with "Event 1," "Event 2," and "Event 4." Further, the interest category "F" has a frequency metric of 12, as it was selected 12 times by users associated with "Event 1," "Event 2," "Event 3," and "Event 4." Further, the interest category "G" has a frequency metric of 3, as it was selected 3 times by users associated with "Event 1," "Event 2," and "Event 4."

In some cases, the venue data structure 1106 can be included in the venue item 1100, and presented to users when they review the venue item 1100. For example, when a user accesses the venue item 1100 (e.g., when browsing for information regarding the venues using the social media platform 150), the social media platform 150 can display a histogram representing the venue data structure 1106 (or other graphical and/or textual representation) to the user. This can be beneficial, for example, as it enables potential attendees of events to identify interest categories relevant to the venue and its associated events, even if those interest categories were not specifically selected by the controlling uses of the venue or the events. This information can also be presented to the controlling user (e.g., to provide the controlling user with information regarding the interests of the anticipated attendees of events associated with the venue).

In some cases, the frequency metrics of a venue data structure can be calculated according to different weights. As an example, interest categories selected by the controlling user of a venue can be assigned a higher weight (e.g., each selection has a weight of 10), whereas other users can be assigned a lower weight (e.g., each selection has a weight of 1). Accordingly, interest category selections made by certain users can have a greater impact on the frequency metrics of the venue data structure.

In some cases, an event's impact on the frequency metrics of a venue data structure can change over time. For example, events that have not yet occurred can be assigned a higher weight (e.g., each interest category selection associated with those events can have a weight of 1). Once the event has occurred, the event can be assigned a progressively lower weight over time (e.g., a weight of 0.75 one month after the event has occurred, a weight of 0.5 two months after the event has occurred, a weight of 0.25 three months after the event has occurred, and a weight of 0 four months after the event has occurred). This time-based "decay" in weighting can be useful, for example, as it favors more recent events in the calculation of frequency metrics for the venue data structure. Accordingly, it may be easier to determine changes to a venue's audience over time. For instance, if a venue was historically associated with comedy events, but has recently transitioned to music events instead, this change in genre can be more readily detected due to the time-based decay in weighting.

Although example weighting criteria and weights are described above, these are merely illustrative examples. In practice, other weighting criteria and/or weights can be used, either instead of or in addition to those described herein.

In some cases, the social media platform 150 can initially generate a venue data structure for a venue item, and modify the venue data structure one or more times after it has been generated.

In some cases, the social media platform 150 can monitor for transactions causing a change to the data of the one or more databases (e.g., transactions executed by the processing module 206 with respect to data stored by the database module 202, such as the social media profiles 210, social media event items 212, and/or venue items 218). If a transaction meets particular trigger criteria, the social media platform 150 can modify one or more venue data structures in response. For instance, if a transaction modifies a data field that will affect an event data structure (e.g., a transaction correction to a user RSVPing "yes" to an event, a user selecting additional interest categories for her social media profile, or other action that can impact the histogram for an event), the social media platform 150 (e.g., using the processing module 206) can mark that transaction with a specific flag, such as a "trigger" flag. When each transaction successfully completes, the social media platform 150 (e.g., using the processing module 206) checks for flags on that transaction, and then calls certain functions based on any identified flags. These functions create their own transactions, which when executed, update the appropriate event data structures and venue data structures accordingly (e.g., updating the histogram for the relevant events and venues). This can be useful, for example, as it enables the social media platform 150 to quickly confirm any changes that a user has made, prior to updating the venue data structures (which may take a relatively longer amount of time to complete). For example, if a user adds a new interest category to her social media profile, the social media platform 150 can quickly confirm the change to the user (such that the user does not have to wait for a long period of time), and subsequently update one or more venue data structures based on the user's changes while the user conducts other tasks.

As an example, if the controlling user modifies the interest category selections of the venue item, in response, the social media platform 150 can modify the venue data structure to reflect these changes (e.g., by adding new interest categories to the venue data structure, removing interest categories from the venue data structure, and/or modifying the frequency metrics of interest categories in the venue data structure). As another example, if one or more additional users indicate that they plan on attending events associated with the venue, in response, the social media platform 150 can modify the venue data structure to reflect these changes (e.g., by adding new interest categories to the venue data structure and/or incrementing the frequency metrics of interest categories selected by the additional users in the venue data structure). As another example, if one or more users indicate that they no longer plan on attending an event associated with the venue, the social media platform 150 can modify the venue data structure to reflect these changes (e.g., by removing interest categories from the venue data structure and/or decrementing the frequency metrics of interest categories selected by those users in the venue data structure). As another example, if one or more users who plan on attending an event associated with the venue modify the interest category selections in their personal social media profiles, the social media platform 150 can modify the venue data structure to reflect these changes (e.g., by adding new interest categories to the venue data structure, removing interest categories from the venue data structure, and/or modifying the frequency metrics of interest categories in the venue data structure). This can be useful, for example, as it enables the social media platform 150 to present accurate information regarding each of the venues.

In some cases, these modifications can be made only with respect to events that have not yet occurred. For example, referring to FIG. 11A, "Event 1" is an event that has already occurred. Accordingly, the social media platform 150 can "freeze" the venue data structure 1104a (e.g., after the occurrence of "Event 1"), and preserve the venue data structure 1104a as a historical record of users' interest categories at the time that the event occurred. However, "Event 2," "Event 3," and "Event 4" have not yet occurred. Accordingly, the social media platform 150 can continue modifying the venue data structures 1104b, 1104c, and 1104d based on user's activities until the occurrence of each respective event (e.g., to provide up to date information regarding the users' interest categories prior to the occurrence of the event).

In some cases, the social media platform 150 can update venue items in real time or substantially real time. For example, the social media platform can monitor transactions to determine whether a particular transaction meets one or more trigger criteria (e.g., a user modifies the interest category selections of an event data item associated with a particular venue, one or more additional users indicate that they plan on attending an event associated with the venue, one or more users indicate that they no longer plan on attending an event associated with the venue, one or more users who plan on attending an event associated with the venue modify the interest category selections in their personal social media profiles, etc.). In response, the social media platform 150 can modify the corresponding venue data structure immediately (or substantially immediately). This can be useful, for example, in enabling the social media platform 150 to maintain continuously up to date information regarding each of the venues.

In some cases, the social media platform 150 can update venue items periodically. For example, the social media platform 150 can determine whether one or more trigger criteria have been met according to a recurring schedule (e.g., once a second, once a minute, once an hour, once a day, or according to some other schedule). Upon determining that a particular trigger criterion is met, the social media platform 150 can modify the corresponding venue data structure in response. This can be useful, for example, in enabling the social media platform 150 to maintain up to date information regarding each of the organized events according to a more predictable schedule, and in a manner that may reduce computation costs (e.g., compared to updating in real time).

This can also be useful, for example, in improving the integrity of data in the social media platform 150. For example, during operation, the social media platform 150 may behave anomalously, resulting in instability (e.g., system crashes). As described above, the social media platform 150 can update venue items in real time or substantially real time (e.g., by monitoring transactions to determine whether a particular transaction meets one or more trigger criteria, and if so, modifying the corresponding venue data structure immediately in response). However, if the social media platform 150 were to experience a system crash after the performance of a transaction, but prior to the venue data structure being updated in response, the venue data structure would not reflect the performance of that transaction. Further, as the venue items are updated in real time or substantially real time, and not according to a predictable schedule, it would be difficult to determine whether the venue item had been properly updated. In contrast, if the social media platform 150 were to update venue items periodically (e.g., in accordance with a predictable schedule), it becomes easier to determine whether each venue item had been properly updated. For example, the time at which the system crashed can be compared to the scheduled update time. If the crash occurred after the scheduled update item, the social media platform 150 can determine that the scheduled update occurred. However, if the crash occurred prior to the scheduled update item, the social media platform 150 can determine that the scheduled update did not occur, and can take corrective action in response (e.g., queue another update during the next scheduled update item). Thus, the reliability of the data in the social media platform 150 can be improved. Nevertheless, this does not preclude the social media platform 150, in some instances, from updating venue items in real time or substantially real time (e.g., when continuously up to date information is more desirable than improved data integrity).

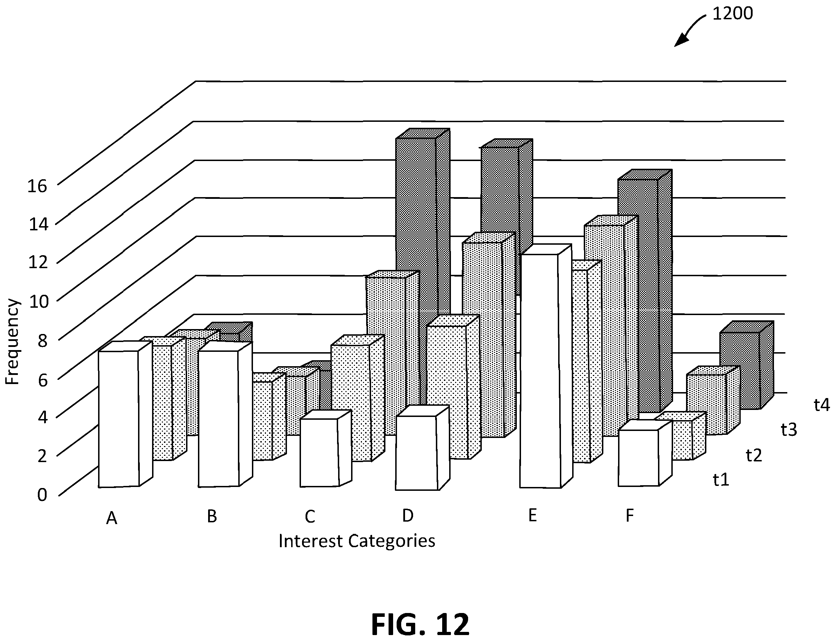

In some cases, the social media platform 150 can generate multiple venue data structures over time, and present some or all of the venue data structures to a user concurrently (e.g., in the form of a three-dimensional histogram). This can be useful, for instance, in determining changes to a venue's characteristics over time. As an example, the social media platform 150 can generate a venue data structure according to a time *t*₁ (e.g., indicating the frequency metrics of interest categories for events associated with the venue as of the time *t*₁). The media platform 150 can also generate additional venue data structures according to times *t*₂, *t*₃, and *t*₄ (e.g., indicating the frequency metrics of interest categories for events associated with the venue as of the times *t*₂, *t*₃, and *t*₄, respectively). Some or all of the venue data structures can be presented concurrently to the user (e.g., in the form of a three-dimensional histogram 1200, as shown in FIG. 12). This enables a user to identify changes in interest categories associated with a venue over time, and to better understand the types of events that occur at the venue and the interests of the attendees of those events.

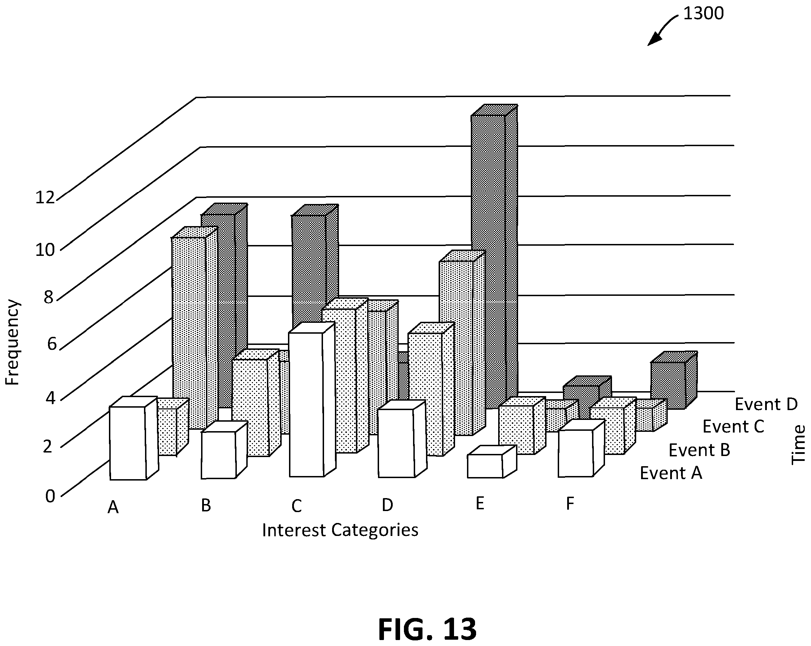

Similarly, the social media platform 150 also can generate multiple event data structures over a series of over time, and present some or all of the event data structures to a user concurrently (e.g., in the form of a three-dimensional histogram). This can be useful, for instance, in determining changes to the demographics of a series of events over time. As an example, recurring a series of events can include "Event A," "Event B," "Event C, and "Event D." Upon the occurrence of "Event A," the social media platform 150 can generate a first event data structure corresponding to the "Event A" (e.g., based on interest category selections by the controlling user of the event and/or the users who indicated that they planned on attending the event). Similarly, upon the occurrences of "Event B," "Event C," and "Event D," the social media platform 150 can generate additional event data structures corresponding to those events (e.g., based on the interest category selections by the controlling user of the events and/or the users who indicated that they planned on attending the events). Some or all of the event data structures can be presented concurrently to the user (e.g., in the form of a three-dimensional histogram 1300, as shown in FIG. 13). This enables a user to identify changes in interest categories associated with a series of events over time, and to better understand the interests of the attendees of those events.

### Example Processes

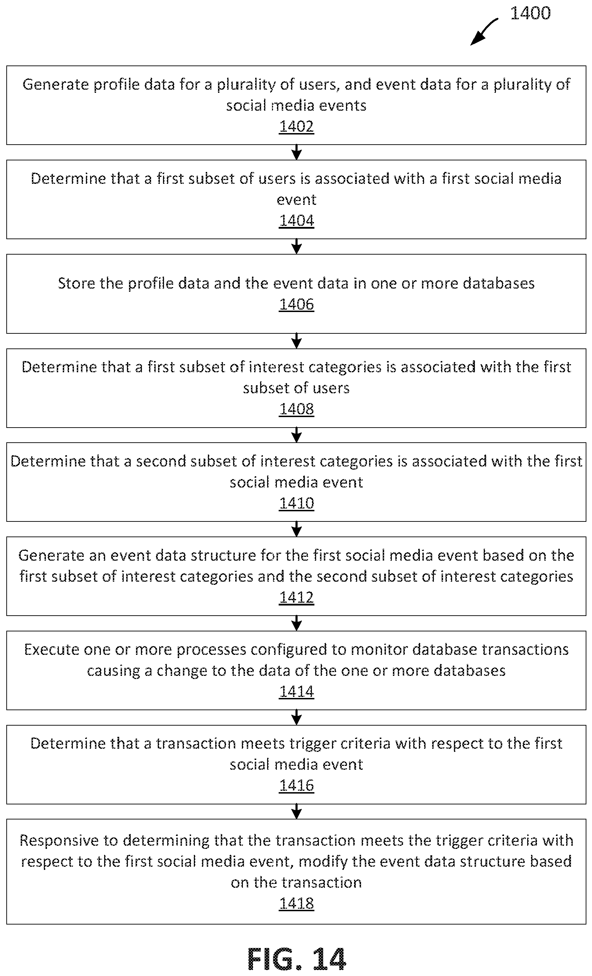

An example process 1400 for identifying and recommending events to users in an automated manner is shown in FIG. 14. In some implementations, the process 1400 can be performed by the system 100 in FIG. 1 and/or the social media platform 150 shown in FIG. 2.

In the process 1400, a server system generates profile data for a plurality of users, and event data for a plurality of social media events (step 1402). The server system can include, for example, the server system 102 including the social media platform 150 described with respect to FIG. 1. The profile data can include, for each user, an indication of one or more interest categories associated with the user. The event data can include, for each social media event, an indication of one or more users associated with the social media event. Examples of this functionality are described, for instance, with respect to FIGS. 3A and 4A.

The server system determines that a first subset of users is associated with a first social media event (step 1404). For example, the server system can determine that one or more particular users have indicated that they plan on attending a particular social media event and/or tentatively plan on attending the particular social media event (e.g., RSVPing "yes" and/or "maybe").

The server system stores the profile data and the event data in one or more databases (step 1406). As an example, the profile data and the event data can be stored using the database module 202 described with respect to FIG. 2.

The server system determines that a first subset of interest categories is associated with the first subset of users (step 1408). This can include, for example, the interest categories that were selected by the first subset of users for inclusion in their profiles.

The server system determines that a second subset of interest categories is associated with the first social media event (step 1410). The second subset of interest categories is selected by a controlling user of the first social media event. This can include, for example, the interest categories that were identified by the controlling user of the first social media event as being relevant to the first social media event.

An event data structure is generated for the first social media event based on the first subset of interest categories and the second subset of interest categories (step 1412). The event data structure includes an indication of the first subset of interest categories and the second subset of interest categories, and for each interest category of the first subset of interest categories and the second subset of interest categories, a respective frequency metric based on a number of users of the first subset of users associated with that interest category and whether that interest category had been selected by the controlling user of the first social media event. Examples of this functionality are described, for instance, with respect to FIGS. 3B, 4B, and 4C.

The server system executes one or more processes configured to monitor database transactions causing a change to the data of the one or more databases (step 1414). This can be performed, for example, using the processing module 206 described with respect to FIG. 2. The transaction can include at least one of a modification to profile data associated with the first subset of users, a modification to event data associated with the first event. In some cases, the modification can include an addition or removal of an interest category (e.g., a user adding or removing an interest category from her profile). In some cases, the modification can include an association of an additional user with the first social media event, or disassociation of a user from the first social media event (e.g., a user RSVPing "yes" and/or "maybe" to an event, or a user switching an RSVP from "yes" and/or "maybe" to "no").

The server system determines that a transaction meets trigger criteria with respect to the first social media event (step 1416). Responsive to determining that the transaction meets the trigger criteria with respect to the first social media event, the event data structure is modified based on the transaction (step 1418).

In some cases, determining that the transaction meets the trigger criteria with respect to the first social media event can include determining that a particular interest category has been added or removed from the profile data of a particular user of the first subset of users, and determining that the first social media event has not yet occurred. Modifying the event data structure can include modifying the frequency metric associated with the particular interest category in the event data structure. In some cases, the server system can further determine that the transaction meets trigger criteria with respect to one or more additional social media events, and responsive to determining that the transaction meets the trigger criteria with respect to the one or more social media events, modifying the event data structures for the one or more social media events based on the transaction.

In some cases, determining that the transaction meets the trigger criteria with respect to the first social media event can include determining that an additional user has been associated with the first social media event, and determining that the first social media event has not yet occurred. Modifying the event data structure can include determining that the additional user is associated with an additional interest category, and, modifying the event data structure to include an indication of the additional interest category.

In some cases, determining that the transaction meets the trigger criteria with respect to the first social media event can include determining that an additional user has been associated with the first social media event, and determining that the first social media event has not yet occurred. Modifying the event data structure can include determining that the additional user is associated with a particular interest category of the first subset of interest categories, and responsive to determining that the additional user is associated with the particular interest category of the first subset of interest categories, modifying the frequency metric associated with the particular interest category in the event data structure. In some cases, modifying the frequency metric associated with the particular interest category in the event data structure can include incrementing the frequency metric associated with the particular interest category.

In some cases, determining that the transaction meets the trigger criteria with respect to the first social media event can include determining that a particular user of the first subset of users has been disassociated with the first social media event, and determining that the first social media event has not yet occurred. Modifying the event data structure can include determining that the disassociated user was associated with a particular interest category of the first subset of interest categories, and responsive to determining that the disassociated user was associated with the particular interest category of the first subset of interest categories, modifying the frequency metric associated with the particular interest category in the event data structure. In some cases, modifying the frequency metric associated with the particular interest category in the event data structure can include decrementing the frequency metric associated with the particular interest category.

In some cases, a histogram can be generated and displayed based on the event data structure. Example histograms are shown, for example, in FIGS. 3B, 4B, and 4C. In some cases, one or more additional event data structures can be generated for one or more additional social media events. Further, a plurality of histograms can be generated and displayed based on the event data structure and the one or more additional event data structures.

In some cases, the profile data can include, for at least one user, an indication of one or more public interest categories associated with that user, and an indication of one or more private interest categories associated with that user. The association between that user and the one or more public interest categories can be accessible by one or more other users, and the association between that user and the one or more private interest categories can be inaccessible to one or more other users. A histogram corresponding to the one or more public interest categories can be generated and displayed based on the event data structure.

In some cases, generating the event data structure based on the first subset of interest categories can include, for each interest category of the first subset of interest categories: incrementing the frequency metric associated with that interest category by a first amount for each user of the first subset of users that is associated with the interest category and has accepted an invitation to the first social media event, and incrementing the frequency metric associated with that interest category by a second amount for each user of the first subset of users that is associated with the interest category and has tentatively accepted an invitation to the first social media event. The first amount can be different than the second amount.

In some cases, determining that the first subset of interest categories is associated with the first subset of users can include identifying, as the first subset of interest categories, one or more interest categories selected by at least one user of the subset of users.

In some cases, the server system can generate a recommendation for the first social media event for an additional user based on the event data structure. Generating the recommendation for the first social media event for the additional user can include retrieving profile data for the additional user, determining, based on the profile data for the additional user, the interest categories associated with the additional user, and determining a recommendation score based on the interest categories associated with the additional user and the event data structure.

Determining the recommendation score can include determining one or more interest categories common to the interest categories associated with the additional user and the event data structure, and summing the frequency metrics of the event data structure corresponding to each of the common interest categories.

Determining the recommendation score further can include determining a distance between a first geographic location associated with the additional user and a second geographic location associated with the first social media event, and modifying the recommendation score based on the distance between the first geographic location and the second geographic location.

Determining the recommendation score can further include determining one or more interest categories common to the second subset of interest categories and the interest categories associated with the additional user, and modifying the recommendation score based on the determination.

Determining the recommendation score can further include determining: a number of users associated with the second user, and a number of users associated with both the second user and the first social media event. Determining the recommendation score can further include modifying the recommendation score based on the determination.

Generating the recommendation for the first social media event for the additional user can further include determining that the recommendation score exceeds a threshold score, and responsive to determining that the recommendation score exceeds the threshold score, generating a notification to the additional user identifying the first social media event.

In some cases, the process 1400 can also include rendering a graphical user interface. The graphical user interface includes a graphical representation of the event data structure. The process 1410 can also include presenting the graphical user interface to a user. An example graphical user interface is shown, for example, in FIG. 9.

In some cases, the event data structure can be modified in substantially real-time. In some cases, the event data structure can be modified periodically.

In some cases, the server system can generate a recommendation for an additional interest category for the first user. Generating the recommendation for the additional interest category can include determining that the first user is associated with a first subset of social media events, determining that a third subset of interest categories is associated with at least one social media event of the first subset of social media events; and determining a recommendation score for each interest category in the third subset of interest categories. Determining the recommendation scores can include retrieving, for each social media event of the first subset of social media events, a corresponding event data structure, and summing, for each interest category of the third subset of interest categories, the frequency metrics of the retrieved event data structures corresponding to the interest category. Determining the recommendation scores can further include determining, for each social media event of the first subset of social media events, one or more interest categories selected by a controlling user of the social media event, and modifying the recommendation scores based on the determination. Examples of this functionality are described, for instance, with respect to FIGS. 5A and 5B.

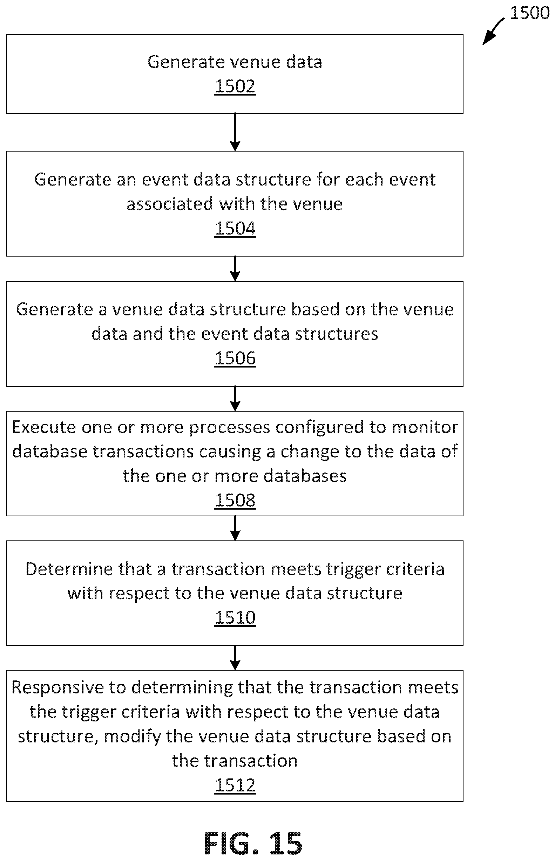

Another example process 1500 for automatically determining characteristics of a venue is shown in FIG. 15. In some implementations, the process 1500 can be performed by the system 100 in FIG. 1 and/or the social media platform 150 shown in FIG. 2.

In the process 1500, a server system generates venue data (step 1502). The venue data includes an indication of one or more first interest categories selected by a controlling user with respect to the venue, and an indication of one or more events associated with a venue. For example, the one or more first interest categories can be selected by a controlling user of a venue (e.g., a user responsible for controlling, administrating, and/or promoting a venue) while populating the venue item. As another example, the one or more events can be specified by the controlling user and/or controlling users of the events (e.g., users responsible for organizing and/or promoting events). Examples of this functionality are shown and described, for instance, with respect to FIG. 11A.

The server system generates an event data structure for each of the one or more events associated with the venue (step 1504). Each event data structure includes an indication of one or more second interest categories associated with the event, and for each interest category of the one or more second interest categories, a respective frequency metric. Example techniques for generating event data structures are shown and described, for instance, with respect to FIGS. 3A-3C, 4A-4C, and 14.

The server system generates a venue data structure based on the venue data and the one or more event data structures (step 1506). The venue data structure includes an indication of the one or more first categories and the one or more second interest categories. The venue data structures also includes, for each interest category of the one or more first categories and the one or more second interest categories, a respective frequency metric determined based on the venue data and the one or more event data structures. Example techniques for generating the venue data structure are shown and described, for instance, with respect with FIGS. 11A and 11B.

In some implementations, generating the venue data structure can include determining, for each event data structure, a respective weight, and determining the frequency metrics of the venue data structure the based on the weights. Each weight can correspond to a recency of occurrence of a respective event.

The server system executes one or more processes configured to monitor database transactions causing a change to the data of the one or more databases (step 1508). The server system determines that a transaction meets trigger criteria with respect to the venue data structure (step 1510). Responsive to determining that the transaction meets the trigger criteria with respect to the venue data structure, the server system modifies the venue data structure based on the transaction (step 1512). In some implementations, transaction can include a modification to one or more event data structures. In some implementations, the transaction can include a modification to the venue data. In some implementations, the venue data structure can be modified in substantially real-time. In some implementations, the venue data structure can be modified periodically. Examples of this functionality are described, for instance, with respect to FIGS. 11A and 11B.

In some implementations, a histogram can be generated and displayed based on the venue data structure (e.g., by a server computer and/or a client computer).

In some implementations, a server system can generate one or more additional venue data structures based on the venue data and the one or more event data structures. Each additional venue data structure can include an indication of the one or more first categories and the one or more second interest categories according to a respective time, and for each interest category of the one or more first categories and the one or more second interest categories, a respective frequency metric according to that time. A plurality of histograms can be generated and displayed based on the venue data structure and the one or more additional venue data structures. Example histograms are shown and described, for instance, with respect to FIGS. 12 and 13.

In some implementations, a graphical user interface can be rendered. The graphical user interface can include a graphical representation of the event data structure. The graphical user interface can be presented to a user.

### Example Systems

Some implementations of subject matter and operations described in this specification can be implemented in digital electronic circuitry, or in computer software, firmware, or hardware, including the structures disclosed in this specification and their structural equivalents, or in combinations of one or more of them. For example, in some implementations, the server system 102, the platform 150, and the client devices 104a-c can be implemented using digital electronic circuitry, or in computer software, firmware, or hardware, or in combinations of one or more of them. In another example, the processes 1400 and 1500 can be implemented using digital electronic circuitry, or in computer software, firmware, or hardware, or in combinations of one or more of them.

Some implementations described in this specification can be implemented as one or more groups or modules of digital electronic circuitry, computer software, firmware, or hardware, or in combinations of one or more of them. Although different modules can be used, each module need not be distinct, and multiple modules can be implemented on the same digital electronic circuitry, computer software, firmware, or hardware, or combination thereof.

Some implementations described in this specification can be implemented as one or more computer programs, i.e., one or more modules of computer program instructions, encoded on computer storage medium for execution by, or to control the operation of, data processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a crossplatform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read only memory or a random access memory or both. A computer includes a processor for performing actions in accordance with instructions and one or more memory devices for storing instructions and data. A computer may also include, or be operatively coupled to receive data from or transfer data to, or both, one or more mass storage devices for storing data, e.g., magnetic, magneto optical disks, or optical disks. However, a computer need not have such devices. Devices suitable for storing computer program instructions and data include all forms of non-volatile memory, media and memory devices, including by way of example semiconductor memory devices (e.g., EPROM, EEPROM, flash memory devices, and others), magnetic disks (e.g., internal hard disks, removable disks, and others), magneto optical disks, and CD-ROM and DVD-ROM disks. The processor and the memory can be supplemented by, or incorporated in, special purpose logic circuitry.

To provide for interaction with a user, operations can be implemented on a computer having a display device (e.g., a monitor, or another type of display device) for displaying information to the user and a keyboard and a pointing device (e.g., a mouse, a trackball, a tablet, a touch sensitive screen, or another type of pointing device) by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A computer system may include a single computing device, or multiple computers that operate in proximity or generally remote from each other and typically interact through a communication network. Examples of communication networks include a local area network ("LAN") and a wide area network ("WAN"), an inter-network (e.g., the Internet), a network comprising a satellite link, and peer-to-peer networks (e.g., ad hoc peer-to-peer networks). A relationship of client and server may arise by virtue of computer programs running on the respective computers and having a client-server relationship to each other.

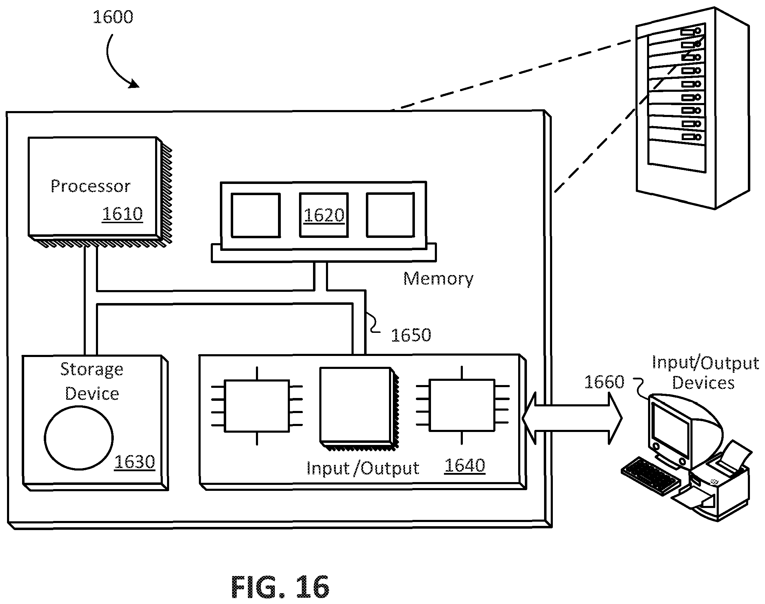

FIG. 16 shows an example computer system 1200 that includes a processor 1600, a memory 1620, a storage device 1630 and an input/output device 1640. Each of the components 1610, 1620, 1630 and 1640 can be interconnected, for example, by a system bus 1650. The processor 1610 is capable of processing instructions for execution within the system 1600. In some implementations, the processor 1610 is a single-threaded processor, a multi-threaded processor, or another type of processor. The processor 1610 is capable of processing instructions stored in the memory 1620 or on the storage device 1630. The memory 1620 and the storage device 1630 can store information within the system 1600.

The input/output device 1640 provides input/output operations for the system 1600. In some implementations, the input/output device 1640 can include one or more of a network interface device, e.g., an Ethernet card, a serial communication device, e.g., an RS-232 port, and/or a wireless interface device, e.g., an 802.11 card, a 3G wireless modem, a 4G wireless modem, a 5G wireless modem, etc. In some implementations, the input/output device can include driver devices configured to receive input data and send output data to other input/output devices, e.g., keyboard, printer and display devices 1660. In some implementations, mobile computing devices, mobile communication devices, and other devices can be used.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple embodiments separately or in any suitable subcombination.

A number of implementations have been described. Nevertheless, it will be understood that various modifications may be made without departing from the scope of the appended claims.

## Claims

1. A computer-implemented method (1400) comprising:
generating (1402), by a server system (102):
profile data for a plurality of users, wherein the profile data comprises, for each user, an indication of one or more interest categories associated with the user; and
event data for a plurality of social media events, wherein the event data comprises, for each social media event, an indication of one or more users associated with the social media event;
determining (1404), by the server system and based on the event data, that a first subset of users is associated with a first social media event;
storing (1406), by the server system, the profile data and the event data in one or more databases;
determining (1408), by the server system and based on the profile data, that a first subset of interest categories is associated with the first subset of users;
determining (1410), by the server system, that a second subset of interest categories is associated with the first social media event, the second subset of interest categories being selected by a controlling user of the first social media event;
generating (1412), by the server system, an event data structure for the first social media event based on the first subset of interest categories and the second subset of interest categories, wherein the event data structure comprises:
an indication of the first subset of interest categories and the second subset of interest categories, and
for each interest category of the first subset of interest categories and the second subset of interest categories, a respective frequency metric based on a number of users of the first subset of users associated with that interest category and whether that interest category had been selected by the controlling user of the first social media event,
executing (1414), by the server system, one or more processes configured to monitor database transactions causing a change to the data of the one or more databases;
determining (1416), by the server system, that a transaction meets trigger criteria with respect to the first social media event, wherein the transaction meets the trigger criteria if the transaction modifies a data field that affects the event data structure; and
responsive to determining that the transaction meets the trigger criteria with respect to the first social media event, modifying (1418) the event data structure based on the transaction, the modifying comprising:
marking the transaction with one or more specific flags, and
when the transaction successfully completes:
checking the transaction to identify the one or more specific flags, and
for each respective flag of the one or more identified specific flags, calling a respective function of a plurality of functions, wherein each of the plurality of functions is configured to create a corresponding own transaction which, when executed, updates one or more corresponding event data structures.

2. The method (1400) of claim 1, wherein
the transaction comprises at least one of a modification to profile data associated with the first subset of users, or a modification to event data associated with the first event, and
optionally the modification comprises either
an addition or removal of an interest category, or
an association of an additional user with the first social media event, or disassociation of a user from the first social media event.

3. The method (1400) of claim 1, wherein determining (1416) that the transaction meets the trigger criteria with respect to the first social media event comprises:
determining that a particular interest category has been added or removed from the profile data of a particular user of the first subset of users, and
determining that the first social media event has not yet occurred,
wherein modifying the event data structure comprises modifying the frequency metric associated with the particular interest category in the event data structure, and
optionally the method further comprises:
determining, by the server system (102), that the transaction meets trigger criteria with respect to one or more additional social media events, and
responsive to determining that the transaction meets the trigger criteria with respect to the one or more social media events, modifying the event data structures for the one or more social media events based on the transaction.

4. The method (1400) of claim 1, wherein determining (1416) that the transaction meets the trigger criteria with respect to the first social media event comprises:
determining that an additional user has been associated with the first social media event, and
determining that the first social media event has not yet occurred,
wherein modifying the event data structure comprises:
determining that the additional user is associated with an additional interest category, and
modifying the event data structure to include an indication of the additional interest category.

5. The method (1400) of claim 1, wherein determining (1416) that the transaction meets the trigger criteria with respect to the first social media event comprises:
determining that an additional user has been associated with the first social media event, and
determining that the first social media event has not yet occurred,
wherein modifying the event data structure comprises:
determining that the additional user is associated with a particular interest category of the first subset of interest categories, and
responsive to determining that the additional user is associated with the particular interest category of the first subset of interest categories, modifying the frequency metric associated with the particular interest category in the event data structure, and
wherein optionally modifying the frequency metric associated with the particular interest category in the event data structure comprises incrementing the frequency metric associated with the particular interest category.

6. The method (1400) of claim 1, wherein determining (1416) that the transaction meets the trigger criteria with respect to the first social media event comprises:
determining that a particular user of the first subset of users has been disassociated with the first social media event, and
determining that the first social media event has not yet occurred,
wherein modifying the event data structure comprises:
determining that the disassociated user was associated with a particular interest category of the first subset of interest categories, and
responsive to determining that the disassociated user was associated with the particular interest category of the first subset of interest categories, modifying the frequency metric associated with the particular interest category in the event data structure, and
wherein optionally modifying the frequency metric associated with the particular interest category in the event data structure comprises decrementing the frequency metric associated with the particular interest category.

7. The method (1400) of claim 1, further comprising either a) or b), wherein
a) is generating and displaying a histogram based on the event data structure, and
b) is generating one or more additional event data structures for one or more additional social media events, and generating and displaying a plurality of histograms based on the event data structure and the one or more additional event data structures.

8. The method (1400) of claim 1, wherein the profile data comprises, for at least one user, an indication of one or more public interest categories associated with that user, and an indication of one or more private interest categories associated with that user,
wherein the association between that user and the one or more public interest categories is accessible by one or more other users, and
wherein the association between that user and the one or more private interest categories is inaccessible to one or more other users, and
wherein optionally the method further comprises comprising generating and displaying a histogram corresponding to the one or more public interest categories based on the event data structure.

9. The method (1400) of claim **1,** wherein generating (1412) the event data structure based on the first subset of interest categories comprises, for each interest category of the first subset of interest categories:
incrementing the frequency metric associated with that interest category by a first amount for each user of the first subset of users that is associated with the interest category and has accepted an invitation to the first social media event; and
incrementing the frequency metric associated with that interest category by a second amount for each user of the first subset of users that is associated with the interest category and has tentatively accepted an invitation to the first social media event,
wherein the first amount is different than the second amount.

10. The method (1400) of claim 1, wherein determining (1408) that the first subset of interest categories is associated with the first subset of users comprises:
identifying, as the first subset of interest categories, one or more interest categories selected by at least one user of the subset of users.

11. The method (1400) of claim 1, further comprising:
generating, by the server system (102), a recommendation for the first social media event for an additional user based on the event data structure by
retrieving profile data for the additional user,
determining, based on the profile data for the additional user, the interest categories associated with the additional user, and
determining a recommendation score based on the interest categories associated with the additional user and the event data structure, by
determining one or more interest categories common to the interest categories associated with the additional user and the event data structure, and
summing the frequency metrics of the event data structure corresponding to each of the common interest categories, and optionally further by either a), b), or c), wherein
a) is determining a distance between a first geographic location associated with the additional user and a second geographic location associated with the first social media event, and modifying the recommendation score based on the distance between the first geographic location and the second geographic location,
b) is determining one or more interest categories common to the second subset of interest categories and the interest categories associated with the additional user, and modifying the recommendation score based on the determination, and
c) is determining a number of users associated with the second user, and a number of users associated with both the second user and the first social media event, and modifying the recommendation score based on the determination, and
wherein optionally generating the recommendation for the first social media event for the additional user further comprises determining that the recommendation score exceeds a threshold score, and responsive to determining that the recommendation score exceeds the threshold score, generating a notification to the additional user identifying the first social media event.

12. The method (1400) of claim 1, further comprising:
rendering a graphical user interface, wherein the graphical user interface includes a graphical representation of the event data structure; and
presenting the graphical user interface to a user.

13. The method (1400) of claim 1, wherein the event data structure is modified either in substantially real-time or periodically.

14. The method (1400) of claim 1, further comprising generating, by the server system (102), a recommendation for an additional interest category for the first user.

15. The method (1400) of claim 14, wherein generating the recommendation for the additional interest category comprises:
determining that the first user is associated with a first subset of social media events;
determining that a third subset of interest categories is associated with at least one social media event of the first subset of social media events; and
determining a recommendation score for each interest category in the third subset of interest categories.

16. The method (1400) of claim 15, wherein
determining the recommendation scores comprises:
retrieving, for each social media event of the first subset of social media events, a corresponding event data structure; and
summing, for each interest category of the third subset of interest categories, the frequency metrics of the retrieved event data structures corresponding to the interest category, and optionally
determining the recommendation scores further comprises
determining, for each social media event of the first subset of social media events, one or more interest categories selected by a controlling user of the social media event, and
modifying the recommendation scores based on the determination.

## Patentansprüche

1. Computerimplementiertes Verfahren (1400), umfassend:
Generieren (1402), durch ein Serversystem (102), von:
Profildaten für eine Vielzahl von Benutzern, wobei die Profildaten für jeden Benutzer eine Angabe von einer oder mehreren Interessenkategorien umfassen, die dem Benutzer zugeordnet sind; und
Ereignisdaten für eine Vielzahl von Social-Media-Ereignissen, wobei die Ereignisdaten für jedes Social-Media-Ereignis eine Angabe von einem oder mehreren Benutzern umfassen, die dem Social-Media-Ereignis zugeordnet sind;
Bestimmen (1404), durch das Serversystem und basierend auf den Ereignisdaten, dass eine erste Teilmenge von Benutzern einem ersten Social-Media-Ereignis zugeordnet ist;
Speichern (1406), durch das Serversystem, der Profildaten und der Ereignisdaten in einer oder mehreren Datenbanken;
Bestimmen (1408), durch das Serversystem und basierend auf den Profildaten, dass eine erste Teilmenge von Interessenkategorien der ersten Teilmenge von Benutzern zugeordnet ist;
Bestimmen (1410), durch das Serversystem, dass eine zweite Teilmenge von Interessenkategorien dem ersten Social-Media-Ereignis zugeordnet ist, wobei die zweite Teilmenge von Interessenkategorien durch einen steuernden Benutzer des ersten Social-Media-Ereignisses ausgewählt wird;
Generieren (1412), durch das Serversystem, einer Ereignisdatenstruktur für das erste Social-Media-Ereignis basierend auf der ersten Teilmenge von Interessenkategorien und der zweiten Teilmenge von Interessenkategorien, wobei die Ereignisdatenstruktur Folgendes umfasst:
eine Angabe der ersten Teilmenge von Interessenkategorien und der zweiten Teilmenge von Interessenkategorien, und
für jede Interessenkategorie der ersten Teilmenge von Interessenkategorien und der zweiten Teilmenge von Interessenkategorien eine jeweilige Frequenzmetrik basierend auf einer Anzahl von Benutzern der ersten Teilmenge von Benutzern, die dieser Interessenkategorie zugeordnet sind, und darauf, ob diese Interessenkategorie von dem steuernden Benutzer des ersten Social-Media-Ereignisses ausgewählt wurde,
Ausführen (1414), durch das Serversystem, eines oder mehrerer Prozesse, die dazu konfiguriert sind, Datenbanktransaktionen zu überwachen, die eine Änderung an den Daten der einen oder der mehreren Datenbanken verursachen;
Bestimmen (1416), durch das Serversystem, dass eine Transaktion Triggerkriterien in Bezug auf das erste Social-Media-Ereignis erfüllt, wobei die Transaktion die Triggerkriterien erfüllt, falls die Transaktion ein Datenfeld modifiziert, das die Ereignisdatenstruktur beeinflusst; und
als Reaktion auf das Bestimmen, dass die Transaktion die Triggerkriterien in Bezug auf das erste Social-Media-Ereignis erfüllt, Modifizieren (1418) der Ereignisdatenstruktur basierend auf der Transaktion, wobei das Modifizieren Folgendes umfasst:
Markieren der Transaktion mit einem oder mehreren spezifischen Flags, und
wenn die Transaktion erfolgreich abgeschlossen ist:
Prüfen der Transaktion, um das eine oder die mehreren spezifischen Flags zu identifizieren, und
für jedes jeweilige Flag von dem einen oder den mehreren identifizierten spezifischen Flags, Aufrufen einer jeweiligen Funktion einer Vielzahl von Funktionen, wobei jede der Vielzahl von Funktionen dazu konfiguriert ist, eine entsprechende eigene Transaktion zu erzeugen, die, wenn sie ausgeführt wird, eine oder mehrere entsprechende Ereignisdatenstrukturen aktualisiert.

2. Verfahren (1400) nach Anspruch 1, wobei
die Transaktion mindestens eine von einer Modifikation von Profildaten, die der ersten Teilmenge von Benutzern zugeordnet sind, oder eine Modifikation von Ereignisdaten umfasst, die dem ersten Ereignis zugeordnet sind, und
wobei die Modifikation gegebenenfalls entweder
eine Hinzufügung oder Entfernung einer Interessenkategorie, oder
eine Zuordnung eines zusätzlichen Benutzers zu dem ersten Social-Media-Ereignis oder die Trennung eines Benutzers von dem ersten Social-Media-Ereignis umfasst.

3. Verfahren (1400) nach Anspruch 1, wobei das Bestimmen (1416), dass die Transaktion die Triggerkriterien in Bezug auf das erste Social-Media-Ereignis erfüllt, Folgendes umfasst:
Bestimmen, dass eine bestimmte Interessenkategorie zu den Profildaten eines bestimmten Benutzers der ersten Teilmenge von Benutzern hinzugefügt oder daraus entfernt wurde, und
Bestimmen, dass das erste Social-Media-Ereignis noch nicht stattgefunden hat,
wobei das Modifizieren der Ereignisdatenstruktur das Modifizieren der Frequenzmetrik umfasst, die der bestimmten Interessenkategorie in der Ereignisdatenstruktur zugeordnet ist, und
wobei gegebenenfalls das Verfahren ferner Folgendes umfasst:
Bestimmen, durch das Serversystem (102), dass die Transaktion Triggerkriterien in Bezug auf ein oder mehrere zusätzliche Social-Media-Ereignisse erfüllt, und als Reaktion auf das Bestimmen, dass die Transaktion die Triggerkriterien in Bezug auf das eine oder die mehreren Social-Media-Ereignisse erfüllt, Modifizieren der Ereignisdatenstrukturen für das eine oder die mehreren Social-Media-Ereignisse basierend auf der Transaktion.

4. Verfahren (1400) nach Anspruch 1, wobei das Bestimmen (1416), dass die Transaktion die Triggerkriterien in Bezug auf das erste Social-Media-Ereignis erfüllt, Folgendes umfasst:
Bestimmen, dass ein zusätzlicher Benutzer dem ersten Social-Media-Ereignis zugeordnet wurde, und
Bestimmen, dass das erste Social-Media-Ereignis noch nicht stattgefunden hat,
wobei das Modifizieren der Ereignisdatenstruktur Folgendes umfasst:
Bestimmen, dass der zusätzliche Benutzer einer zusätzlichen Interessenkategorie zugeordnet ist, und
Modifizieren der Ereignisdatenstruktur, um eine Angabe der zusätzlichen Interessenkategorie zu enthalten.

5. Verfahren (1400) nach Anspruch 1, wobei das Bestimmen (1416), dass die Transaktion die Triggerkriterien in Bezug auf das erste Social-Media-Ereignis erfüllt, Folgendes umfasst:
Bestimmen, dass ein zusätzlicher Benutzer dem ersten Social-Media-Ereignis zugeordnet wurde, und
Bestimmen, dass das erste Social-Media-Ereignis noch nicht stattgefunden hat, wobei das Modifizieren der Ereignisdatenstruktur Folgendes umfasst:
Bestimmen, dass der zusätzliche Benutzer einer bestimmten Interessenkategorie der ersten Teilmenge von Interessenkategorien zugeordnet ist, und
als Reaktion auf das Bestimmen, dass der zusätzliche Benutzer der bestimmten Interessenkategorie der ersten Teilmenge von Interessenkategorien zugeordnet ist, Modifizieren der Frequenzmetrik, die der bestimmten Interessenkategorie in der Ereignisdatenstruktur zugeordnet ist, und
wobei gegebenenfalls das Modifizieren der Frequenzmetrik, die der bestimmten Interessenkategorie in der Ereignisdatenstruktur zugeordnet ist, Inkrementieren der Frequenzmetrik umfasst, die der bestimmten Interessenkategorie zugeordnet ist.

6. Verfahren (1400) nach Anspruch 1, wobei das Bestimmen (1416), dass die Transaktion die Triggerkriterien in Bezug auf das erste Social-Media-Ereignis erfüllt, Folgendes umfasst:
Bestimmen, dass ein bestimmter Benutzer der ersten Teilmenge von Benutzern von dem ersten Social-Media-Ereignis getrennt worden ist, und
Bestimmen, dass das erste Social-Media-Ereignis noch nicht stattgefunden hat,
wobei das Modifizieren der Ereignisdatenstruktur Folgendes umfasst:
Bestimmen, dass der getrennte Benutzer einer bestimmten Interessenkategorie der ersten Teilmenge von Interessenkategorien zugeordnet war, und
als Reaktion auf das Bestimmen, dass der getrennte Benutzer der bestimmten Interessenkategorie der ersten Teilmenge von Interessenkategorien zugeordnet war, Modifizieren der Frequenzmetrik, die der bestimmten Interessenkategorie in der Ereignisdatenstruktur zugeordnet ist, und
wobei gegebenenfalls das Modifizieren der Frequenzmetrik, die der bestimmten Interessenkategorie in der Ereignisdatenstruktur zugeordnet ist, Dekrementieren der Frequenzmetrik umfasst, die der bestimmten Interessenkategorie zugeordnet ist.

7. Verfahren (1400) nach Anspruch 1, ferner umfassend entweder a) oder b), wobei
a) Generieren und Anzeigen eines Histogramms basierend auf der Ereignisdatenstruktur ist, und
b) Generieren einer oder mehrerer zusätzlicher Ereignisdatenstrukturen für ein oder mehrere zusätzliche Social-Media-Ereignisse, und Generieren und Anzeigen einer Vielzahl von Histogrammen basierend auf der Ereignisdatenstruktur und der einen oder den mehreren zusätzlichen Ereignisdatenstrukturen ist.

8. Verfahren (1400) nach Anspruch 1, wobei die Profildaten für mindestens einen Benutzer eine Angabe von einer oder mehreren öffentlichen Interessenkategorien, die diesem Benutzer zugeordnet sind, und eine Angabe von einer oder mehreren privaten Interessenkategorien, die diesem Benutzer zugeordnet sind, umfassen,
wobei die Zuordnung zwischen diesem Benutzer und der einen oder den mehreren öffentlichen Interessenkategorien für einen oder mehrere andere Benutzer zugänglich ist, und
wobei die Zuordnung zwischen diesem Benutzer und der einen oder den mehreren privaten Interessenkategorien für einen oder mehrere andere Benutzer unzugänglich ist, und
wobei das Verfahren gegebenenfalls ferner Generieren und Anzeigen eines Histogramms umfasst, das der einen oder den mehreren öffentlichen Interessenkategorien basierend auf der Ereignisdatenstruktur entspricht.

9. Verfahren (1400) nach Anspruch 1, wobei das Generieren (1412) der Ereignisdatenstruktur basierend auf der ersten Teilmenge von Interessenkategorien für jede Interessenkategorie der ersten Teilmenge von Interessenkategorien Folgendes umfasst:
Inkrementieren der Frequenzmetrik, die dieser Interessenkategorie zugeordnet ist, um einen ersten Betrag für jeden Benutzer der ersten Teilmenge von Benutzern, der der Interessenkategorie zugeordnet ist und eine Einladung zu dem ersten Social-Media-Ereignis angenommen hat; und
Inkrementieren der Frequenzmetrik, die dieser Interessenkategorie zugeordnet ist, um einen zweiten Betrag für jeden Benutzer der ersten Teilmenge von Benutzern, der der Interessenkategorie zugeordnet ist und vorläufig eine Einladung zu dem ersten Social-Media-Ereignis angenommen hat,
wobei der erste Betrag unterschiedlich zum zweiten Betrag ist.

10. Verfahren (1400) nach Anspruch 1, wobei das Bestimmen (1408), dass die erste Teilmenge von Interessenkategorien der ersten Teilmenge von Benutzern zugeordnet ist, Folgendes umfasst:
Identifizieren, als die erste Teilmenge von Interessenkategorien, einer oder mehrerer Interessenkategorien, die von mindestens einem Benutzer der Teilmenge von Benutzern ausgewählt wurden.

11. Verfahren (1400) nach Anspruch 1, ferner umfassend:
Generieren, durch das Serversystem (102), einer Empfehlung für das erste Social-Media-Ereignis für einen zusätzlichen Benutzer basierend auf der Ereignisdatenstruktur durch
Abrufen von Profildaten für den zusätzlichen Benutzer,
Bestimmen, basierend auf den Profildaten für den zusätzlichen Benutzer, der Interessenkategorien, die dem zusätzlichen Benutzer zugeordnet sind, und
Bestimmen eines Empfehlungszahlenwertes basierend auf den Interessenkategorien, die dem zusätzlichen Benutzer zugeordnet sind, und der Ereignisdatenstruktur durch
Bestimmen einer oder mehrerer Interessenkategorien, die den Interessenkategorien gemeinsam sind, die dem zusätzlichen Benutzer und der Ereignisdatenstruktur zugeordnet sind, und
Summieren der Frequenzmetriken der Ereignisdatenstruktur, die jeder der gemeinsamen Interessenkategorien entsprechen, und gegebenenfalls weiter durch entweder a), b) oder c), wobei
a) Bestimmen einer Entfernung zwischen einem ersten geografischen Standort, der dem zusätzlichen Benutzer zugeordnet ist, und einem zweiten geografischen Standort, der dem ersten Social-Media-Ereignis zugeordnet ist, und Modifizieren des Empfehlungszahlenwertes basierend auf der Entfernung zwischen dem ersten geografischen Standort und dem zweiten geografischen Standort ist,
b) Bestimmen einer oder mehrerer Interessenkategorien, die der zweiten Teilmenge von Interessenkategorien und den Interessenkategorien, die dem zusätzlichen Benutzer zugeordnet sind, gemeinsam sind, und Modifizieren des Empfehlungszahlenwertes basierend auf der Bestimmung ist, und
c) Bestimmen einer Anzahl von Benutzern, die dem zweiten Benutzer zugeordnet sind, und einer Anzahl von Benutzern, die sowohl dem zweiten Benutzer als auch dem ersten Social-Media-Ereignis zugeordnet sind, und Modifizieren des Empfehlungszahlenwertes basierend auf der Bestimmung ist, und
wobei gegebenenfalls das Generieren der Empfehlung für das erste Social-Media-Ereignis für den zusätzlichen Benutzer ferner Bestimmen, dass der Empfehlungszahlenwert einen Schwellenzahlenwert überschreitet, und als Reaktion auf das Bestimmen, dass der Empfehlungszahlenwert den Schwellenzahlenwert überschreitet, Generieren einer Benachrichtigung an den zusätzlichen Benutzer, die das erste Social-Media-Ereignis identifiziert, umfasst.

12. Verfahren (1400) nach Anspruch 1, ferner umfassend:
Rendern einer grafischen Benutzeroberfläche, wobei die grafische Benutzeroberfläche eine grafische Darstellung der Ereignisdatenstruktur enthält; und
Präsentieren der grafischen Benutzeroberfläche für einen Benutzer.

13. Verfahren (1400) nach Anspruch 1, wobei die Ereignisdatenstruktur entweder im Wesentlichen in Echtzeit oder periodisch modifiziert wird.

14. Verfahren (1400) nach Anspruch 1, ferner umfassend Generieren, durch das Serversystem (102), einer Empfehlung für eine zusätzliche Interessenkategorie für den ersten Benutzer.

15. Verfahren (1400) nach Anspruch 14, wobei das Generieren der Empfehlung für die zusätzliche Interessenkategorie Folgendes umfasst:
Bestimmen, dass der erste Benutzer einer ersten Teilmenge von Social-Media-Ereignissen zugeordnet ist;
Bestimmen, dass eine dritte Teilmenge von Interessenkategorien mindestens einem Social-Media-Ereignis der ersten Teilmenge von Social-Media-Ereignissen zugeordnet ist; und
Bestimmen eines Empfehlungszahlenwertes für jede Interessenkategorie in der dritten Teilmenge von Interessenkategorien.

16. Verfahren (1400) nach Anspruch 15, wobei
das Bestimmen der Empfehlungszahlenwerte Folgendes umfasst:
Abrufen, für jedes Social-Media-Ereignis der ersten Teilmenge von Social-Media-Ereignissen, einer entsprechenden Ereignisdatenstruktur; und
Summieren, für jede Interessenkategorie der dritten Teilmenge von Interessenkategorien, der Frequenzmetriken der abgerufenen Ereignisdatenstrukturen entsprechend der Interessenkategorie, und gegebenenfalls
das Bestimmen der Empfehlungszahlenwerte ferner Folgendes umfasst
Bestimmen, für jedes Social-Media-Ereignis der ersten Teilmenge von Social-Media-Ereignissen, einer oder mehrerer Interessenkategorien, die von einem steuernden Benutzer des Social-Media-Ereignisses ausgewählt werden, und
Modifizieren der Empfehlungszahlenwerte basierend auf der Bestimmung.

## Revendications

1. Procédé mis en œuvre par ordinateur (1400) comprenant :
générer (1402), par un système serveur (102) :
des données de profil pour une pluralité d'utilisateurs, dans lesquelles les données de profil comprennent, pour chaque utilisateur, une indication d'une ou de plusieurs catégories d'intérêt associées audit utilisateur ; et
des données d'événement pour une pluralité d'événements de médias sociaux, dans lesquelles les données d'événement comprennent, pour chaque événement de média social, une indication d'un ou de plusieurs utilisateurs associés audit événement de média social ;
déterminer (1404), par le système serveur et sur la base des données d'événement, qu'un premier sous-ensemble d'utilisateurs est associé à un premier événement de média social ;
stocker (1406), par le système serveur, les données de profil et les données d'événement dans une ou plusieurs bases de données ;
déterminer (1408), par le système serveur et sur la base des données de profil, qu'un premier sous-ensemble de catégories d'intérêt est associé au premier sous-ensemble d'utilisateurs ;
déterminer (1410), par le système serveur, qu'un second sous-ensemble de catégories d'intérêt est associé au premier événement de média social, le second sous-ensemble de catégories d'intérêt étant sélectionné par un utilisateur de contrôle du premier événement de média social ;
générer (1412), par le système serveur, une structure de données d'événement pour le premier événement de média social sur la base du premier sous-ensemble de catégories d'intérêt et du second sous-ensemble de catégories d'intérêt, dans laquelle la structure de données d'événement comprend :
une indication du premier sous-ensemble de catégories d'intérêt et du second sous-ensemble de catégories d'intérêt, et
pour chaque catégorie d'intérêt du premier sous-ensemble de catégories d'intérêt et du second sous-ensemble de catégories d'intérêt, une métrique de fréquence respective basée sur un nombre d'utilisateurs du premier sous-ensemble d'utilisateurs associés à ladite catégorie d'intérêt et sur le fait que ladite catégorie d'intérêt a été sélectionnée par l'utilisateur de contrôle du premier événement de média social ;
exécuter (1414), par le système serveur, un ou plusieurs processus configurés pour surveiller des transactions de base de données provoquant une modification des données de la ou des bases de données ;
déterminer (1416), par le système serveur, qu'une transaction satisfait à des critères de déclenchement en ce qui concerne le premier événement de média social, dans laquelle la transaction satisfait aux critères de déclenchement si la transaction modifie un champ de données qui affecte la structure de données d'événement ; et
en réponse à la détermination que la transaction satisfait aux critères de déclenchement en ce qui concerne le premier événement de média social, modifier (1418) la structure de données d'événement sur la base de la transaction, la modification comprenant :
marquer la transaction à l'aide d'un ou de plusieurs indicateurs spécifiques,
et
lorsque la transaction s'achève avec succès :
vérifier la transaction afin d'identifier le ou les indicateurs spécifiques, et
pour chaque indicateur respectif du ou des indicateurs spécifiques identifiés, appeler une fonction respective d'une pluralité de fonctions, dans laquelle chacune de ladite pluralité de fonctions est configurée pour créer une transaction propre correspondante qui, lorsqu'elle est exécutée, met à jour une ou plusieurs structures de données d'événement correspondantes.

2. Procédé (1400) selon la revendication 1, dans lequel
la transaction comprend au moins l'une d'une modification des données de profil associées au premier sous-ensemble d'utilisateurs ou d'une modification des données d'événement associées au premier événement, et
facultativement la modification comprend soit
un ajout ou une suppression d'une catégorie d'intérêt, soit
une association d'un utilisateur supplémentaire avec le premier événement de média social, ou une dissociation d'un utilisateur du premier événement de média social.

3. Procédé (1400) selon la revendication 1, dans lequel la détermination (1416) que la transaction satisfait aux critères de déclenchement en ce qui concerne le premier événement de média social comprend :
déterminer qu'une catégorie d'intérêt particulière a été ajoutée ou supprimée des données de profil d'un utilisateur particulier du premier sous-ensemble d'utilisateurs, et
déterminer que le premier événement de média social ne s'est pas encore produit,
dans lequel la modification de la structure de données d'événement comprend la modification de la métrique de fréquence associée à la catégorie d'intérêt particulière dans la structure de données d'événement, et
facultativement le procédé comprend en outre :
déterminer, par le système serveur (102), que la transaction satisfait aux critères de déclenchement en ce qui concerne un ou plusieurs événements de médias sociaux supplémentaires, et
en réponse à la détermination que la transaction satisfait aux critères de déclenchement en ce qui concerne le ou les événements de médias sociaux, modifier les structures de données d'événement pour le ou les événements de médias sociaux sur la base de la transaction.

4. Procédé (1400) selon la revendication 1, dans lequel la détermination (1416) que la transaction satisfait aux critères de déclenchement en ce qui concerne le premier événement de média social comprend :
déterminer qu'un utilisateur supplémentaire a été associé au premier événement de média social, et
déterminer que le premier événement de média social ne s'est pas encore produit,
dans lequel la modification de la structure de données d'événement comprend :
déterminer que l'utilisateur supplémentaire est associé à une catégorie d'intérêt supplémentaire, et
modifier la structure de données d'événement de manière à inclure une indication de la catégorie d'intérêt supplémentaire.

5. Procédé (1400) selon la revendication 1, dans lequel la détermination (1416) que la transaction satisfait aux critères de déclenchement en ce qui concerne le premier événement de média social comprend :
déterminer qu'un utilisateur supplémentaire a été associé au premier événement de média social, et
déterminer que le premier événement de média social ne s'est pas encore produit, dans lequel la modification de la structure de données d'événement comprend :
déterminer que l'utilisateur supplémentaire est associé à une catégorie d'intérêt particulière du premier sous-ensemble de catégories d'intérêt, et
en réponse à la détermination que l'utilisateur supplémentaire est associé à la catégorie d'intérêt particulière du premier sous-ensemble de catégories d'intérêt, modifier la métrique de fréquence associée à la catégorie d'intérêt particulière dans la structure de données d'événement, et
dans lequel facultativement la modification de la métrique de fréquence associée à la catégorie d'intérêt particulière dans la structure de données d'événement comprend l'incrémentation de la métrique de fréquence associée à la catégorie d'intérêt particulière.

6. Procédé (1400) selon la revendication 1, dans lequel la détermination (1416) que la transaction satisfait aux critères de déclenchement en ce qui concerne le premier événement de média social comprend :
déterminer qu'un utilisateur particulier du premier sous-ensemble d'utilisateurs a été dissocié du premier événement de média social, et
déterminer que le premier événement de média social ne s'est pas encore produit,
dans lequel la modification de la structure de données d'événement comprend :
déterminer que l'utilisateur dissocié était associé à une catégorie d'intérêt particulière du premier sous-ensemble de catégories d'intérêt, et
en réponse à la détermination que l'utilisateur dissocié était associé à la catégorie d'intérêt particulière du premier sous-ensemble de catégories d'intérêt, modifier la métrique de fréquence associée à la catégorie d'intérêt particulière dans la structure de données d'événement, et
dans lequel facultativement la modification de la métrique de fréquence associée à la catégorie d'intérêt particulière dans la structure de données d'événement comprend la décrémentation de la métrique de fréquence associée à la catégorie d'intérêt particulière.

7. Procédé (1400) selon la revendication 1, comprenant en outre soit a) soit b), dans lequel
a) correspond à la génération et à l'affichage d'un histogramme sur la base de la structure de données d'événement, et
b) correspond à la génération d'une ou de plusieurs structures de données d'événement supplémentaires pour un ou plusieurs événements de médias sociaux supplémentaires, et à la génération et à l'affichage d'une pluralité d'histogrammes sur la base de la structure de données d'événement et de la ou des structures de données d'événement supplémentaires.

8. Procédé (1400) selon la revendication 1, dans lequel les données de profil comprennent, pour au moins un utilisateur, une indication d'une ou de plusieurs catégories d'intérêt publiques associées audit utilisateur, et une indication d'une ou de plusieurs catégories d'intérêt privées associées audit utilisateur,
dans lequel l'association entre ledit utilisateur et la ou les catégories d'intérêt publiques est accessible par un ou plusieurs autres utilisateurs, et
dans lequel l'association entre ledit utilisateur et la ou les catégories d'intérêt privées est inaccessible à un ou plusieurs autres utilisateurs, et
dans lequel facultativement le procédé comprend en outre la génération et l'affichage d'un histogramme correspondant à la ou aux catégories d'intérêt publiques sur la base de la structure de données d'événement.

9. Procédé (1400) selon la revendication 1, dans lequel la génération (1412) de la structure de données d'événement sur la base du premier sous-ensemble de catégories d'intérêt comprend, pour chaque catégorie d'intérêt du premier sous-ensemble de catégories d'intérêt :
l'incrémentation de la métrique de fréquence associée à ladite catégorie d'intérêt d'une première valeur pour chaque utilisateur du premier sous-ensemble d'utilisateurs qui est associé à la catégorie d'intérêt et qui a accepté une invitation au premier événement de média social ; et
l'incrémentation de la métrique de fréquence associée à ladite catégorie d'intérêt d'une seconde valeur pour chaque utilisateur du premier sous-ensemble d'utilisateurs qui est associé à la catégorie d'intérêt et qui a accepté à titre provisoire une invitation au premier événement de média social,
dans lequel la première valeur est différente de la seconde valeur.

10. Procédé (1400) selon la revendication 1, dans lequel la détermination (1408) que le premier sous-ensemble de catégories d'intérêt est associé au premier sous-ensemble d'utilisateurs comprend :
identifier, en tant que premier sous-ensemble de catégories d'intérêt, une ou plusieurs catégories d'intérêt sélectionnées par au moins un utilisateur du sous-ensemble d'utilisateurs.

11. Procédé (1400) selon la revendication 1, comprenant en outre :
générer, par le système serveur (102), une recommandation pour le premier événement de média social à destination d'un utilisateur supplémentaire sur la base de la structure de données d'événement, par
la récupération des données de profil de l'utilisateur supplémentaire,
la détermination, sur la base des données de profil de l'utilisateur supplémentaire, des catégories d'intérêt associées à l'utilisateur supplémentaire, et
la détermination d'un score de recommandation sur la base des catégories d'intérêt associées à l'utilisateur supplémentaire et de la structure de données d'événement, par
la détermination d'une ou de plusieurs catégories d'intérêt communes aux catégories d'intérêt associées à l'utilisateur supplémentaire et à la structure de données d'événement, et
la sommation des métriques de fréquence de la structure de données d'événement correspondant à chacune des catégories d'intérêt communes, et facultativement en outre par soit a), soit b), soit c), dans lequel
a) correspond à la détermination d'une distance entre une première localisation géographique associée à l'utilisateur supplémentaire et une seconde localisation géographique associée au premier événement de média social, et à la modification du score de recommandation sur la base de la distance entre la première localisation géographique et la seconde localisation géographique,
b) correspond à la détermination d'une ou de plusieurs catégories d'intérêt communes au second sous-ensemble de catégories d'intérêt et aux catégories d'intérêt associées à l'utilisateur supplémentaire, et à la modification du score de recommandation sur la base de la détermination, et
c) correspond à la détermination d'un nombre d'utilisateurs associés à un second utilisateur, et d'un nombre d'utilisateurs associés à la fois au second utilisateur et au premier événement de média social, et à la modification du score de recommandation sur la base de la détermination, et
dans lequel facultativement la génération de la recommandation pour le premier événement de média social à destination de l'utilisateur supplémentaire comprend en outre la détermination que le score de recommandation dépasse un score seuil, et, en réponse à la détermination que le score de recommandation dépasse le score seuil, la génération d'une notification à destination de l'utilisateur supplémentaire identifiant le premier événement de média social.

12. Procédé (1400) selon la revendication 1, comprenant en outre :
le rendu d'une interface utilisateur graphique, dans laquelle l'interface utilisateur graphique comprend une représentation graphique de la structure de données d'événement ; et
la présentation de l'interface utilisateur graphique à un utilisateur.

13. Procédé (1400) selon la revendication 1, dans lequel la structure de données d'événement est modifiée soit sensiblement en temps réel, soit périodiquement.

14. Procédé (1400) selon la revendication 1, comprenant en outre la génération, par le système serveur (102), d'une recommandation pour une catégorie d'intérêt supplémentaire pour le premier utilisateur.

15. Procédé (1400) selon la revendication 14, dans lequel la génération de la recommandation pour la catégorie d'intérêt supplémentaire comprend :
déterminer que le premier utilisateur est associé à un premier sous-ensemble d'événements de médias sociaux ;
déterminer qu'un troisième sous-ensemble de catégories d'intérêt est associé à au moins un événement de média social du premier sous-ensemble d'événements de médias sociaux ; et
déterminer un score de recommandation pour chaque catégorie d'intérêt du troisième sous-ensemble de catégories d'intérêt.

16. Procédé (1400) selon la revendication 15, dans lequel la détermination des scores de recommandation comprend :
la récupération, pour chaque événement de média social du premier sous-ensemble d'événements de médias sociaux, d'une structure de données d'événement correspondante ; et
la sommation, pour chaque catégorie d'intérêt du troisième sous-ensemble de catégories d'intérêt, des métriques de fréquence des structures de données d'événement récupérées correspondant à ladite catégorie d'intérêt, et facultativement
la détermination des scores de recommandation comprend en outre
la détermination, pour chaque événement de média social du premier sous-ensemble d'événements de médias sociaux, d'une ou de plusieurs catégories d'intérêt sélectionnées par un utilisateur de contrôle de l'événement de média social, et
la modification des scores de recommandation sur la base de la détermination.
